# EUROPEAN PATENT SPECIFICATION

(11) **EP 3 699 702 B1**
(45) Date of publication and mention of the grant of the patent: **29.06.2022**
(21) Application number: 20157669.1
(22) Date of filing: 17.02.2020
(51) Int. Cl.: G05B 19/406, G05B 23/02, A61C 13/00, G05B 19/418

(54) **DENTAL PROCESSING MACHINE-OPERATING DEVICE, DENTAL PROCESSING MACHINE-OPERATING METHOD AND DENTAL PROCESSING MACHINE-OPERATING SYSTEM**
BETRIEBSVERFAHREN FÜR ZAHNBEARBEITUNGSMASCHINE UND BETRIEBSSYSTEM FÜR ZAHNBEARBEITUNGSMASCHINE
DISPOSITIF, PROCÉDÉ ET SYSTÈME DE FONCTIONNEMENT DE MACHINE DE TRAITEMENT DENTAIRE

(30) Priority: 20.02.2019 JP 2019028899
(43) Date of publication of application: 26.08.2020
(73) Proprietor: DGSHAPE Corporation, Hamamatsu-shi, Shizuoka 431-2103 (JP)
(72) Inventor: HANAJIMA, Masaki, Hamamatsu-shi, Shizuoka 431-2103 (JP); YOSHIOKA, Shiro, Hamamatsu-shi, Shizuoka 431-2103 (JP); OTAKA, Akira, Hamamatsu-shi, Shizuoka 431-2103 (JP); TANGE, Shota, Hamamatsu-shi, Shizuoka 431-2103 (JP)
(74) Representative: Grünecker Patent- und Rechtsanwälte PartG mbB

(56) References cited:
- EP-A1- 3 361 339
- WO-A1-2010/139563
- KR-B1- 101 570 843
- US-A1- 2007 097 996
- US-B1- 6 323 882

## Description

### TECHNICAL FIELD

The present invention relates to a system and a method for operating a dental processing machine.

### BACKGROUND ART

JP 2018-124862 A discloses a dental processing machine that operates according to a processing program (also referred to as NC data) to cut a workpiece into a desired shape.

### CITATION LIST

### Patent Literature

[Patent Literature 1] JP 2018-124862 A

### SUMMARY OF INVENTION

### TECHNICAL PROBLEM

A dental processing machine is operated according to a processing program. The dental processing machine can be configured such that a plurality of processing programs are executed successively in a certain order. However, when an error occurs in the dental processing machine, the dental processing machine is initialized. When this occurs, various data, including the processing programs and the order in which the processing programs are to be executed, are erased from the dental processing machine. To restart the dental processing machine, the data including the processing programs and the order in which the processing programs are to be executed need to be sent to the dental processing machine all over again.

### SOLUTION TO PROBLEM

This is achieved by the features of the independent claims. The present invention provides a dental processing machine-operating system including a dental processing machine-operating device and a dental processing machine as well as a respective operating method. A dental processing machine-operating device proposed herein includes a first list storage unit, a first status storage unit, a first error detection unit, and a first skipping process unit.

The first list storage unit stores a job list in which a plurality of processing programs, each defining a processing procedure performed by the dental processing machine, are associated with an order in which the plurality of processing programs are to be executed.

The first status storage unit is configured to acquire, from the dental processing machine, execution statuses of the plurality of processing programs contained in the job list, and to store the execution statuses of the plurality of processing programs.

The first error detection unit is configured to detect an error in the dental processing machine.

The first skipping process unit is configured to, if the first error detection unit detects an error while the plurality of processing programs contained in the job list are being executed successively, set the execution status of one of the processing programs that is currently being executed when the error is detected to an end, based on the execution statuses of the plurality of processing programs stored in the first status storage unit, and to cause the dental processing machine to execute another processing program to be executed next after the one of the processing programs according to the order specified in the job list.

According to the present invention, a dental processing machine-operating system includes an operating device and a dental processing machine, mutually data-communicably connected to the operating device. The system may further include a server, data-communicably connected to the operating device. The server includes a second list storage unit for storing the job list acquired from the operating device, and a second status management unit for acquiring execution statuses of a plurality of processing programs contained in the job list through the operating device and storing the execution statuses of the plurality of processing programs.

Moreover, the dental processing machine-operating system proposed herein may further include an external device data-communicably connected to the server or the operating device. The external device may include a third status management unit for acquiring execution statuses of a plurality of processing programs contained in the job list through the server or the operating device, and for storing the execution statuses of the plurality of processing programs. The external device may further include a third error detection unit for detecting an error in the dental processing machine through the server or the operating device. The external device may include a second skipping process unit configured to, if the third error detection unit detects an error while the plurality of processing programs contained in the job list are being executed sequentially, set the execution status of one of the processing programs that is currently being executed when the error is detected to an end, based on the execution statuses of the plurality of processing programs stored in the third status management unit, and to cause the dental processing machine to execute another processing program that is to be executed next after the one of the processing programs, according to the order specified in the job list.

### ADVANTAGEOUS EFFECTS OF INVENTION

Embodiments of the present invention enable a dental processing machine to end one of the processing programs that is currently being executed even if an error is detected in the dental processing machine, and to cause the dental processing machine to execute another one of the processing programs that is to be executed next after the preceding one of the processing programs. As a result, the operation for resuming the dental processing machine is made easier.

### BRIEF DESCRIPTION OF DRAWINGS

Fig. 1 is a view illustrating an example of the configuration of a dental processing machine-operating system according to the present disclosure.
Fig. 2 is a block diagram illustrating a configuration of a dental processing machine 1.
Fig. 3 is a view illustrating a data string of a processing program CP contained in a milling file 21a in this embodiment.
Fig. 4 is a view illustrating an example of a job list JL.
Fig. 5 is a view illustrating an example of a log file LF.
Fig. 6 shows an example of a code table used for recording event IDs.
Fig. 7 is a view illustrating an example of processing information data PD.
Fig. 8 is a view illustrating an example of data acquired from a comment line S1.
Fig. 9 shows an example of a job list JL displayed on a display of an operating device 11.
Fig. 10 shows another example of the job list JL displayed on the display of the operating device 11.
Fig. 11 shows an example of a job list JL displayed on a display of an operating device 11 including a first skip processing unit 125 according to the present disclosure.
Fig. 12 shows another example of the job list JL displayed on a display of the operating device 11 including the first skip processing unit 125 according to the present disclosure.

### DESCRIPTION OF EMBODIMENTS

Hereinbelow, a dental processing machine-operating method and a dental processing machine-operating system will be described in accordance with embodiments of the present invention. It should be noted, however, that the embodiments described herein are, of course, not intended to limit the present invention, which is defined by the appended claims.

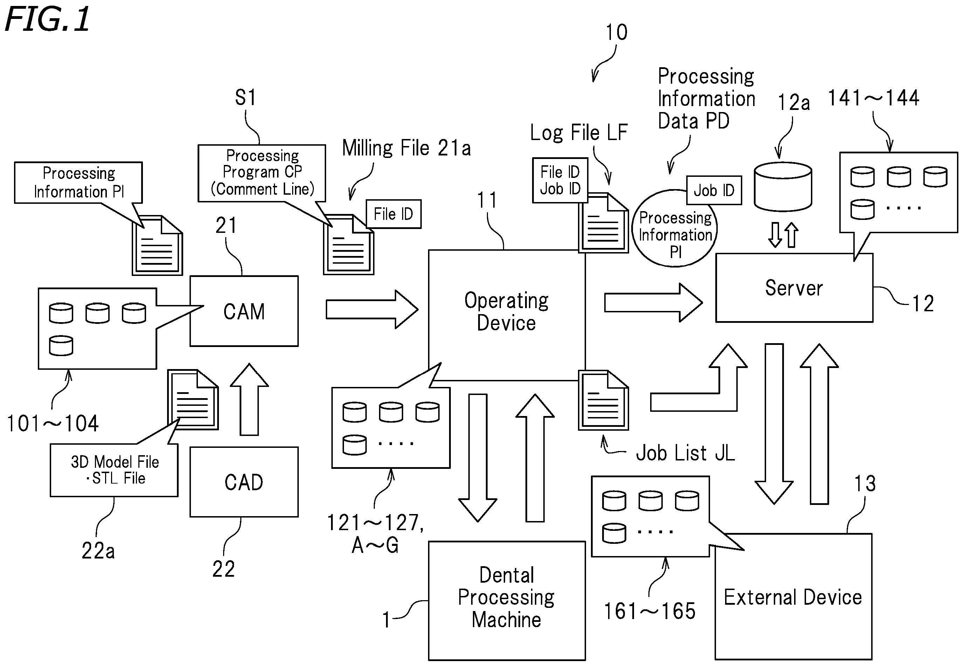

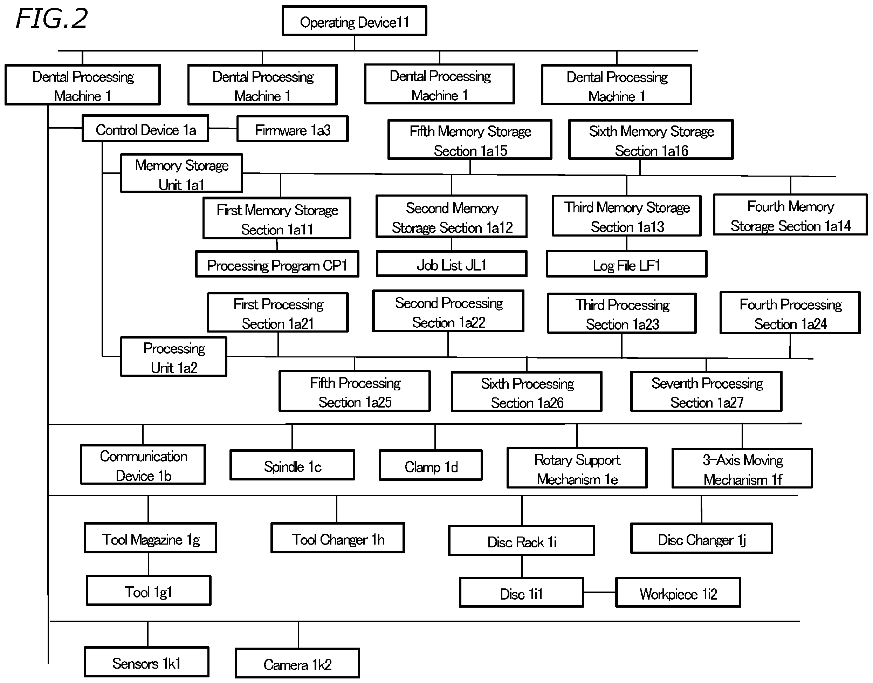

Fig. 1 is a view illustrating an example of the configuration of a dental processing machine-operating system according to the present disclosure. It should be noted, however, that, in order to facilitate understanding of the entire operating system, Fig. 1 also shows some devices that are not included in the operating system. Fig. 2 is a block diagram illustrating a configuration of a dental processing machine 1.

### Dental Processing Machine Operating System

As illustrated in Fig. 1, a dental processing machine-operating system 10 herein includes an operating device 11, a server 12, and an external device 13. Each of the operating device 11, the server 12, and the external device 13 may be implemented by, for example, a computer that is operated according to a predetermined program. Specifically, each of the operating device 11, the server 12, and the external device 13 includes an arithmetic device [also referred to as a processor, CPU (central processing unit), or MPU (micro-processing unit)] and a memory storage device (such as a memory and a hard disk), which performs various processing in cooperation with software. For example, each of the configurations and operations of the operating device 11, the server 12, and the external device 13 may be embodied as a database that stores various data embodied by a computer, a data structure, or a processing module that performs predetermined computing processes according to a predetermined program, or as part of the database, the data structure, or the processing module.

### Operating Device 11

The operating device 11 is a device for operating a dental processing machine 1. As illustrated in Fig. 2, the operating device 11 is data-communicably connected to a plurality of dental processing machines 1 and is configured to be able to operate the plurality of dental processing machines 1. The operating device 11 is configured to cooperate with firmware 1a3 incorporated in each of the dental processing machines 1 to control the dental processing machines 1. In this case, an identification number is assigned to each of the dental processing machines 1 to identify the dental processing machine 1 so that each of the dental processing machines 1 can be identified by the corresponding identification number. The operating device 11 communicates with the dental processing machines 1 at every predetermined time and obtains data related to the status of the dental processing machines 1 through the firmware 1a3, to monitor the status of the dental processing machines 1.

### Processing Program CP

The operating device 11 sends a processing program CP to a dental processing machine 1. The dental processing machine 1 executes the processing program CP through the firmware 1a3. The processing program CP is created by a CAM software-equipped device 21. The processing program CP may be created based on a 3D model file 22a that is created by a CAD software-equipped device 22. The 3D model file 22a is, for example, what is called an STL file produced in STL format. The 3D model file 22a records the shape of a product that is to be shaped by the dental processing machine 1. Each of the processing programs CP may be a data group for controlling the dental processing machine 1, and a milling file 21a that records a processing program CP may be what is called an NC program. The milling file 21a recording a processing program CP may be, for example, an NC file containing NC data. The processing programs CP are transferred from the CAM software-equipped device 21 to the operating device 11.

The CAM software is programmed to perform various settings about processing, such as selection of a prosthesis, selection of the type of material, and selection of the shape of the material (e.g., disc or block, the thickness of the disc, and the like) and also to generate a tool path. The CAM software-equipped device 21 retains data that are required in various settings related to the processing, such as selection of the prosthesis, selection of the type of the material, and selection of the shape of the material (e.g., disc or block, the thickness of the disc, and the like) that are necessary in the processing. These data include data of predetermined items concerning the materials or products to be processed by the processing programs. Processing information PI, which contains the data of predetermined items concerning the materials or products to be processed by the processing programs, may be prepared by the CAM software-equipped device 21 in advance, as illustrated in Fig. 1. These data may also be prepared by, for example, an operator who handles the CAM software-equipped device 21 in advance.

The CAM software-equipped device 21 may retain data of predetermined items concerning the materials or products to be processed by the processing programs. The data of predetermined items concerning the materials or products to be processed by the processing programs may either be stored in a memory storage area of the CAM software-equipped device 21, or be read out from an external storage device such as a USB memory stick or a hard disk drive (HDD).

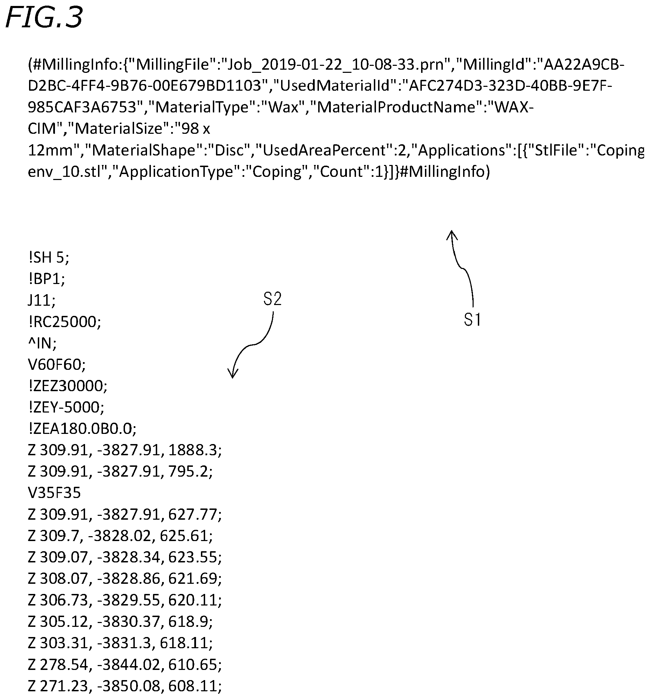

Fig. 3 is a view illustrating a data string of a processing program CP contained in a milling file 21a in this embodiment. The processing program CP shown in Fig. 3 is provided with a comment line S1, which is enclosed in brackets, at the first line. The comment line contains the file name of a milling file (Milling File Name) that records the processing program CP, a milling file ID (Milling File ID), and processing information PI. The milling file ID may also be referred to as "file ID" when appropriate. After the comment line S1, the processing program CP shown in Fig. 3 describes commands that specify the processing procedure carried out by the processing program CP.

Herein, the "comment line" is a line that is input in a processing program in a predetermined format, and it is a portion that is not read as a program by a compiler. The way of setting the comment line is defined by the programming language used for the processing program. It is possible that, for example, the "comment line" may contain a comment written by any combination of characters contained in a character set of the computer. Herein, CAM software is used to record the file name of a milling file (Milling File Name), a milling file ID (Milling File ID), and processing information PI into such a "comment line".

In this embodiment, data of predetermined items concerning the material or product to be processed by a processing program are recorded in the comment line of the processing program CP. When the processing program CP is executed by the dental processing machine 1, the data of predetermined items concerning the material or product to be processed, which are recorded in such a comment line, are ignored as a mere comment.

The data and the file IDs recorded in the comment line may be created by data of key-value pairs, each including a key and a value. In this case, the comment line may be written in a predetermined format by which the type and value of the data can be identified.

For example, for the predetermined items concerning the material or product to be processed, a predetermined item concerning the material or product to be processed is set as a "key", and the data of the item is set as a "value". For the file IDs and the file names, each of the items such as the file ID and the file name is set as the "key", while each of the file ID and the file name is set as a "value". The data format of the key-value pairs may employ, for example, the JSON format. Here, the JSON format is a format in which the name of an item and its value are paired with a colon, ":", separating the item name and the value. It should be noted that the data format of the key-value pair data is not limited to the JSON format. The comment line may widely adopt various other types of formats that can identify the type and value of the data. For example, the comment line may be written in XML format.

### Processing Information PI

Herein, data of predetermined items concerning materials and products to be processed may be referred to as "processing information PI" when appropriate. The processing information PI may contain at least the information about the material to be processed, and may contain other kinds of information when appropriate.

### Items of Processing Information PI

The data items that may be contained in the processing information PI may include, for example, the following items.
- Material ID
- Type of the material to be processed
- Product name of the material to be processed
- Size of the material to be processed
- Shape of the material to be processed (such as disc, block, etc.)
- Required area of the material to be processed (for example, what percentage of the entire material is used)
- List of information about products contained in the processing file

Herein, the "material ID" is set for each type of material so that the material of the workpiece can be identified in advance. In some cases, the workpiece may be a material that has been used, i.e., a used material. In that case, the material ID may be referred to as a "used material ID".

The "type of the material to be processed" may record various types of materials, such as ceramic material (for example, zirconia ceramic material), resin material, glass material, metal material, and wax material.

The "product name of the material to be processed" may record, for example, a product name of the workpiece when the workpiece is a commercially available product.

The "size of the material to be processed" may record the size of the workpiece.

The "shape of the material to be processed" may record the shape of the workpiece, such as disc, block, etc.

The "required area of the material to be processed" may be the data that indicates what percentage of the material is used by the product to be processed by the processing data. Such data can serve to find out how much of one material is used by the processing. In addition, such data may serve to calculate the material cost required by the processing.

The "list of information about products contained in the processing file" contains the information of the products to be processed by the processing program CP. The information that may be contained in the list includes, for example, the file name of the STL file that records the three-dimensional data of the product, the type of the product (crown, bridge, etc.), the number of products to be formed by the processing program CP, and the tooth number of the tooth to which the tooth filling formed as the product is to be fitted. Thus, the product processed by the dental processing machine 1 may be a dental prosthesis, such as an "inlay" or a "crown". The predetermined items concerning the product may contain the information of dental prosthesis such as "inlay" and "crown".

Furthermore, the CAM software may be programmed so that a comment line that records the file name of the milling file (Milling File Name) and the milling file ID (Milling File ID) can be inserted in the processing program CP.

### Milling File Name

Herein, the milling file name is a file name given to each milling file 21a in the CAM software-equipped device 21. The CAM software-equipped device 21 manages the milling files 21a with such file names.

### Milling File ID

Milling file IDs are assigned so that each of the milling files 21a has a milling file ID. Accordingly, even when different milling files 21a have the same file name, the milling file IDs enable the different milling files 21a to be distinguished from each other.

The CAM software may be programmed to prepare a milling file ID for identifying the corresponding processing program and to insert a comment line containing the prepared milling file ID into the processing program CP. In this case, the CAM software may be programmed so as to insert a comment line that also contains the file name in addition to the milling file ID into the processing program CP. Fig. 3 is a view illustrating an example of processing program CP in which a comment line S1 is inserted. As illustrated in Fig. 3, for example, the CAM software is programmed to insert a comment line that records the milling file name, the milling file ID, and the processing information PI into the processing program CP. It is also possible that the CAM software may be programmed to record the milling file name and the milling file ID in another different comment line from the comment line that records the processing information PI, and insert the other comment line into the processing program CP.

Such a process of inserting a comment line may be executed by the CAM software, for example, when the processing program CP is output to a predetermined memory storage area by the CAM software. In this case, each of the processing programs CP that is output from the CAM always contains a comment line that records the file name of the milling file, the milling file ID, and processing information PI. Also, a unique milling file ID is assigned to each of the processing programs CP. Therefore, the milling file ID identifies one of the processing programs CP. The memory storage area to which the processing program CP is output may be a predetermined memory storage area of the CAM software-equipped device 21 or may be a predetermined memory storage area of the operating device 11. The predetermined memory storage area may be a predetermined memory storage area of an external storage device, such as a USB memory or a hard disk drive (HDD) that is mounted to the operating device 11. The predetermined memory storage area may also be a predetermined memory storage area of an external server that utilizes a cloud computing system.

For example, the milling file 21a contains a processing program CP that specifies a processing procedure to be performed by the dental processing machine 1. In some cases, the processing program CP may be edited and updated in the CAM software-equipped device 21 with the file name of the milling file 21a unchanged. Even in this case, when the processing program CP is output to the predetermined memory storage area by the CAM software, a milling file ID is assigned to the milling file, and a comment line recording the milling file ID is inserted in the processing program CP. Thus, the milling file ID recorded in the comment line makes it possible to identify which one of the milling files is the one that have been sent to the operating device 11 at what time.

Accordingly, it is also possible to identify the processing program CP of the milling file that is identified by the milling file ID. Also inserted into the processing program CP is a comment line that records data of predetermined items concerning the material or product to be processed by the processing program.

In this case, the same processing program CP may sometimes be utilized to process different materials. In such a case, it is possible that different data may be prepared for the predetermined items concerning the materials or products to be processed by the processing programs be retained in the CAM software-equipped device 21. For example, for the process of inserting a comment line into a processing program, data of predetermined items concerning the materials or products to be processed by the processing program may be stored in association with corresponding processing programs CP. The CAM software may be programmed to insert a comment line that records data of predetermined items concerning the material or product to be processed by the processing program into a corresponding processing program CP that is associated with the data.

In this embodiment, the file name of the milling file and the milling file ID are given to the comment line of the processing program CP that is stored in the operating device 11. The file name of the milling file and the milling file ID are given to the comment line of the processing program CP by, for example, the CAM software-equipped device 21. This ensures that the processing program CP and the milling file ID are associated with each other with certainty, because the milling file ID is written into the processing program CP. In addition, the operating device 11 that has received the processing program CP is able to identify the milling file ID of the processing program CP by analyzing the processing program CP in a predetermined method.

As described above, in this embodiment, the milling file 21a containing the processing program CP is sent from the CAM software-equipped device 21 to the operating device 11. In this case, the processing program CP recorded in the milling file 21a has a comment line S1 that records a file ID and processing information PI, as illustrated in Fig. 3. This eliminates the need of the process of associating the file ID and the processing information PI additionally with the processing program CP because the processing program CP has the comment line S1 that records the file ID and the processing information PI. Also, the processing program CP is sent from the operating device 11 to the dental processing machine 1. The operating device 11 and the dental processing machine 1 include a processing unit configured to obtain the milling file ID and the data of predetermined items concerning the material or product to be processed from the comment line of the processing program CP. This enables the operating device 11 and the dental processing machine 1 to obtain the milling file ID and the data of predetermined items concerning the material or product to be processed from the comment line of the processing program CP.

Accordingly, the operating device 11 and the dental processing machine 1 can utilize the milling file ID and the data of predetermined items concerning the material or product to be processed, which are obtained from the comment line of the processing program CP, to create log data containing the milling file ID. In addition, the operating device 11 and the dental processing machine 1 can record the data of predetermined items concerning the material or product to be processed by the processing program CP.

### Job ID

In this embodiment, the processing program CP is also provided with a job ID. Here, the job ID is an ID that is assigned to the processing program CP when the processing program CP is sent from the operating device 1 1 to the dental processing machine 1. Here, in order to identify the processing program CP that has been sent to the dental processing machine 1, the job ID, which is a different ID from the milling file ID, is prepared. It is possible that either the operating device 11 or the dental processing machine 1 may create the job ID.

Specifically, each time a processing program CP is sent from the operating device 11 to the dental processing machine 1, a different job ID is assigned to the processing program CP. This job ID is different from the milling file ID. This means that, although the processing program CP has the same milling file ID, a different job ID is assigned to the processing program CP when, for example, the same processing program CP is resent from the operating device 11 to the dental processing machine 1. In this embodiment, the comment line of the processing program CP contains the file ID and processing information PI. Although the processing program CP contains the same file ID and the same processing information PI, the processing program CP is provided with a different job ID when the processing program CP is resent. In this way, when the same processing program CP is resent from the operating device 11 to the dental processing machine 1, the resent processing program CP can be identified by the job ID. Thus, both a milling file ID and a job ID, which is prepared separately from the milling file ID, are assigned to each of the processing programs CP sent to the dental processing machine 1. As a result, both the milling file ID and the job ID can be used to identify the processing program CP sent to the dental processing machine 1. This makes it possible to more specifically identify the processing program CP that has been executed by the dental processing machine 1.

This embodiment makes it possible to acquire the file name, the file ID, and the processing information PI by analyzing the comment line S1 (see Fig. 3) of the processing program CP. As a result, the dental processing machine 1 is able to acquire the file name, the file ID, and the processing information PI. Also, the job ID is assigned to the processing program CP when the processing program CP is sent from the operating device 11 to the dental processing machine 1. In addition, the operating device 11 can create a job list JL in which the processing programs CP are classified by job IDs. Likewise, the dental processing machine 1 can also create a job list JL in which the processing programs CP are classified by job IDs. When the dental processing machine 1 executes a processing program CP, the dental processing machine 1 can sent log data containing the job ID to the operating device 11. It is also possible that the log data containing the job ID may be created by the operating device 11 based on the data sent from the dental processing machine 1 to the operating device 11. As a consequence, the operating device 11 is able to manage the log data based on the job ID to create a log file LF containing the job ID.

### Job List JL

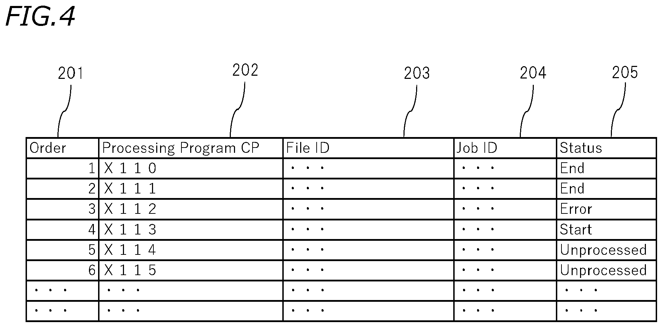

Fig. 4 is a view illustrating an example of a job list JL.

The operating device 11 sends processing programs CP to a dental processing machines 1. The operating device 11 creates a job list JL for the processing programs CP that have been sent to the dental processing machine 1. As illustrated in Fig. 4, the job list JL may be a list that associates the processing programs CP that are sent from the operating device 11 to the dental processing machine 1 with the numerical order in which the processing programs CP are to be executed by the dental processing machine 1. The job list JL shown in Fig. 4 is provided with columns 201 to 205 for recording the numerical order of execution, processing program CP, milling file ID, job ID, and status, respectively.

For example, in this embodiment, the processing programs CP are executed by the dental processing machine 1 in the order in which they are sent from the operating device 11 to the dental processing machine 1. In this case, it is possible that, in the column 201 for recording the numerical order of execution and the column 202 for recording processing programs CP, the processing programs CP may be listed in the order in which they are sent from the operating device 11 to the dental processing machine 1, to create a job list JL. The milling file IDs and the job IDs are recorded respectively in the columns 203 and 204 for recording file ID and job ID. The statuses of execution of the processing programs CP are recorded in the column 205 for recording status, according to data communication with the dental processing machine 1. Note that the statuses may be recorded using predetermined code numbers. Also in this embodiment, a job ID for identifying a processing program CP is assigned to each processing program CP when the processing program CP is sent from the operating device 11 to the dental processing machine 1. The job ID may be assigned at the same time as the job list JL is created.

### Log File LF

In this embodiment, the operating device 11 creates a log file LF in which log data of a processing program CP are recorded by the dental processing machine 1. The log data record what has been performed or what has not been performed by the processing program CP. The log file LF records log data including, for example, start, stop, pause, resumption, cancellation, and end of execution of the processing program CP, and the times at which these events occurred. The log file LF also records a predetermined error code if an error occurs while the processing program CP is being executed. The operating device 11 may be configured to create a log file LF based on the data obtained by communication with the dental processing machine 1.

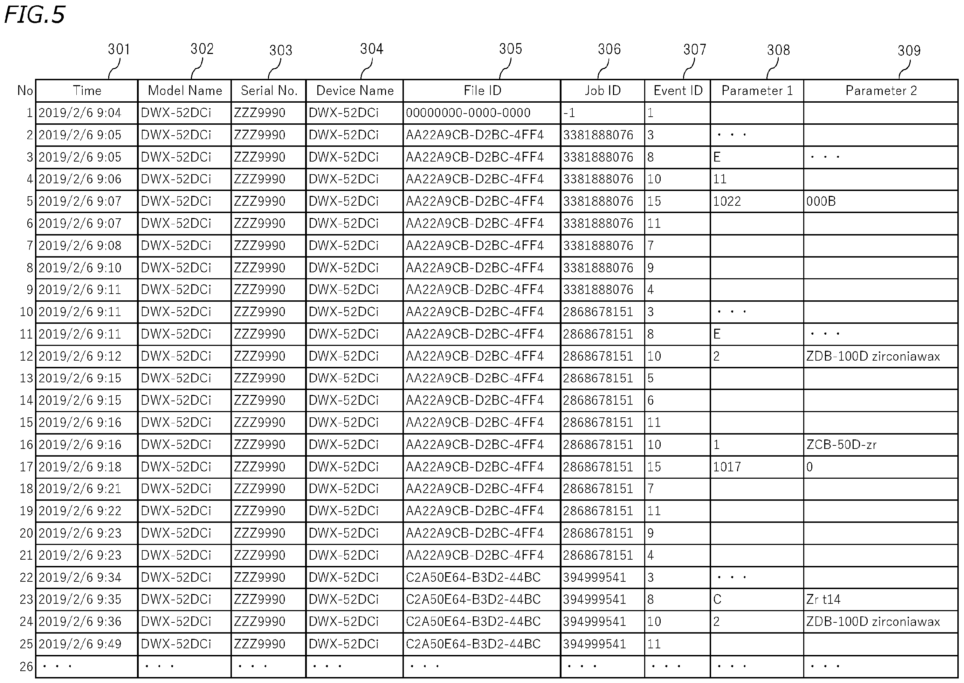

Fig. 5 is a view illustrating an example of the log file LF. In this embodiment, as illustrated in Fig. 5, a log file LF1 includes columns 301 to 309, which respectively record time, model name, serial number, device name, file ID, job ID, event ID, parameter 1, and parameter 2, with regard to log data.

Among these columns, the column 301 for recording time records the time at which the log data are acquired. Model name, serial number, and device name, which are respectively recorded in the columns 302 to 304, are the information for identifying the dental processing machine 1. These pieces of information are given to the log data by, for example, a firmware 1a3 of the dental processing machine 1. The columns 305 and 306 for recording file ID and job ID respectively record file IDs and job IDs.

### Event ID

The column 307 for recording event ID records predetermined codes, which are determined to respectively indicate various events, such as start, stop, pause, resume, cancel, end, and error of execution. The columns 308 and 309 for recording parameters 1 and 2 record pieces of information that respectively accompany the events. For convenience, numbers are assigned to the left side of each row of the log data in Fig. 5, in order to distinguish the log data.

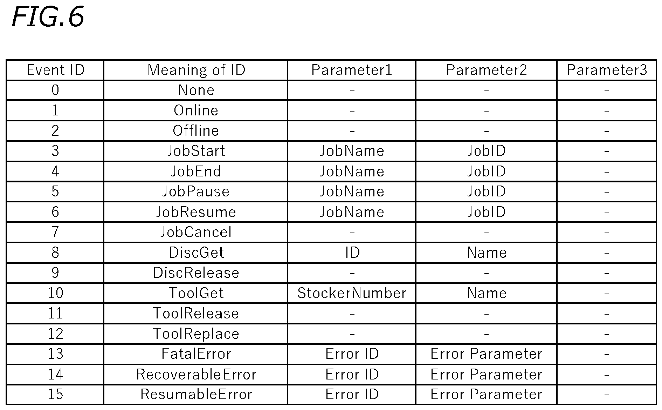

Fig. 6 shows an example of a code table used for recording event IDs. Among them, respective event IDs 3 to 15 indicate JobStart, JobEnd, JobPause, JobResume, JobCancel, DiscGet, DiscRelease, ToolGet, ToolRelease, ToolReplace, FatalError, RecoverableError, and ResumableError. Parameters 1 and 2 indicate pieces of information to be recorded in the log data, along with the corresponding events. Data corresponding to parameters 1 and 2 are referenced from other data and recorded in the log data.

Accordingly, the log file LF shown in Fig. 5 shows that the log data indicating a series of processes (i.e., jobs) performed by a processing program CP are recorded in the 2nd to 9th log data. Here, the 2nd to 9th log data record the times at which the following events occurred in the dental processing machine 1: start, disc get, tool get, occurrence of resumable error, tool release, cancel, disc release, and end, respectively. The 10th to 21st log data record that another series of jobs are executed, and then the 22nd log data and onward record that still another series of jobs are executed. The jobs are identified by the job IDs. The processing programs CP are identified by the file IDs.

It is also possible that a similar log file LF1 may be created by a firmware 1a3 of the dental processing machine 1. When this is the case, the operating device 11 may be configured to acquire the log file LF1 created by the firmware 1a3 of the dental processing machine 1. For convenience in illustration, the log file created by the dental processing machine 1 is referred to as a "log file LF1" as appropriate. The log file recorded by the operating device 11 is referred to as a "log file LF". This makes it possible to distinguish the two log files.

### Processing Information Data PD

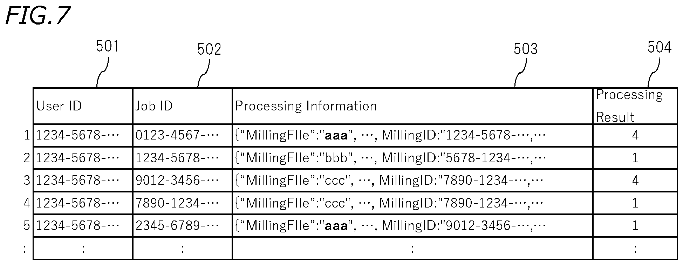

Fig. 7 is a view illustrating an example of processing information data PD. Processing information data PD are acquired from a job ID and the comment line S1 (see Fig. 3) of the processing program CP. The processing information data PD is a data file containing a file ID and a data group containing data of predetermined items concerning the material or product to be processed.

The processing information data PD shown in Fig. 7 contains record columns 501 to 504, which sequentially record user IDs, job IDs, processing information, and processing results, respectively. Herein, the user IDs are assigned to the users who manage the dental processing machine 1. A user ID may be contained, for example, in a portion of the log data sent from the dental processing machine 1. In addition, job IDs are recorded in the record column 502 for recording job IDs. Data acquired by analyzing the comment line S1 of the processing program CP are recorded in the record column 503 for recording processing information.

In this embodiment, the record column 503 for recording processing information contains data groups each containing a file name, a milling file ID, and data of predetermined items concerning the material or product to be processed. These data groups may be recorded in, for example, the JSON format. The record column 504 for recording processing results may record the results of execution of a processing program CP, obtained from the log data identified by a job ID. In the example shown in Fig. 7, the results of execution of the processing program CP are recorded, for example, using predetermined code numbers.

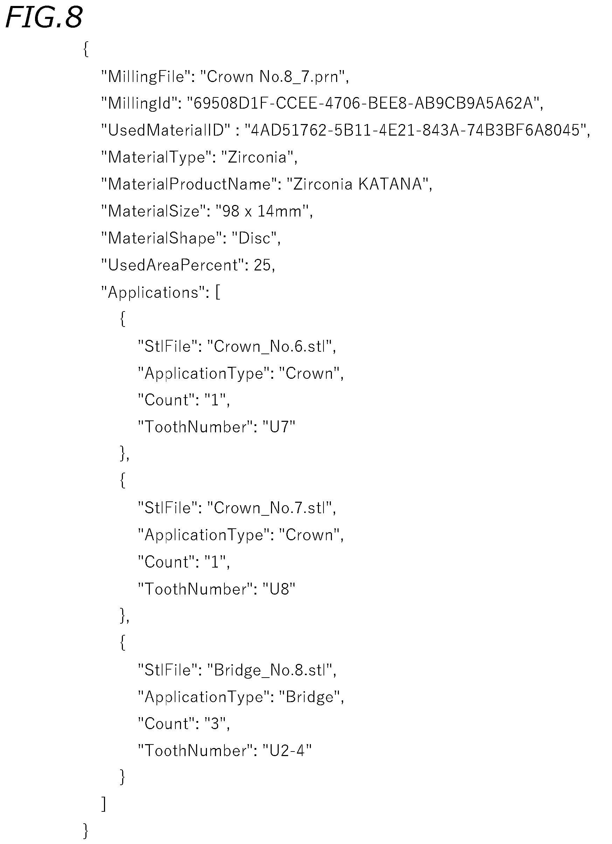

From such processing information data PD, it is possible to identify the processing (i.e., the job) performed by the dental processing machine 1 using the job ID, and it is also possible to acquire the data group recorded in the comment line S1 (see Fig. 3) of the processing program CP, which was executed in the job. Fig. 8 is a view illustrating an example of data acquired from a comment line S1. From the comment line S1, it is possible to acquire the processing information PI containing the file name of the milling file 21a, the file ID, and data of predetermined items concerning the material or product to be processed, as illustrated in Fig. 8. These data are acquired every time the dental processing machine 1 executes a processing program CP, in other words, for each of the jobs identified by a job ID.

Thus, data of predetermined items concerning the material or product to be processed are recorded every time the dental processing machine 1 executes a processing program CP. As a result, more detailed data analysis is possible every time the dental processing machine 1 executes a processing program CP, in other words, for each of the jobs identified by a job ID. In addition, the data of predetermined items concerning the material or product to be processed are obtained for each of the jobs identified by a job ID. Therefore, it is possible to calculate the cost of the processed material for each process of the dental processing machine 1, for example. The dental processing machine 1 is used to mill dental fillings. In that case, because the dental fillings are small in size, a plurality of processed products (dental fillings) may be produced from a single workpiece retained in a disc 1i1 (see Fig. 2) of the dental processing machine 1. In addition, the dental fillings have complicated shapes, so it is difficult to calculate how much of the workpiece has been used for the processed products. With the method and device proposed herein, data of predetermined items concerning the material or product to be processed are obtained for each work of the dental processing machine 1. This makes it possible to carry out more detailed analysis on the material to be processed. Because such data groups are acquired from the data recorded in the comment line S1 of the processing program CP, they are not altered after having been output from the CAM software. As a result, it is unlikely to mistake the data for each of the jobs identified by job IDs, so data management becomes easier.

In this operating system 10, the operating device 11 is data-communicably connected to the server 12. The operating device 11 sends various data, such as job lists JL, log files LF, and processing information data PD, to the server 12. The server 12 records the data sent from the operating device 11, such as job lists JL, log files LF, and processing information data PD, into a database 12a. In addition, the server 12 may record milling files 21a containing processing programs CP. In this case, the server 12 may record the milling files 21a and the file IDs in association with each other. When the milling files 21a and the file IDs are associated with each other, it is possible to find out a milling file 21a and a processing program CP from the log file Lf, the processing information data PD, and the like.

Further, the external device 13 is able to obtain various data, such as job lists JL, log files LF, and processing information data PD, from the server 12. This enables the external device 13 to carry out data analysis based on the data such as the job lists JL, the log files LF, and the processing information data PD. The operating system 10 may be configured to access the operating device 11 via the server 12 and to remotely operate the operating device 11 and the dental processing machine 1.

The server 12 is not limited thereto. The server 12 may also be configured to receive various information and data, such as the information that the operating device 11 has sent to the dental processing machine 1 and the data concerning the status of the dental processing machine 1 that the operating device 11 has obtained through the firmware 1a3. The server 12 includes the database 12a, and it may store, for example, data concerning the status of the dental processing machine 1, which are sent from the operating device 11. The server 12 is further connected data-communicably to the external device 13. The external device 13 may be configured to acquire the data accumulated in the server 12 as appropriate.

### Dental Processing Machine 1

Specific drawings of the dental processing machine 1 are not provided herein. It should be noted that only an example of the dental processing machine 1 will be shown herein. The dental processing machine 1 is not limited to the embodiments described herein. As illustrated in Fig. 2, the dental processing machine 1 includes a control device 1a, a communication device 1b, a spindle 1c, a clamp 1d, a rotary support mechanism 1e, a 3-axis moving mechanism If, a tool magazine 1g, a tool changer 1h, a disc rack 1i, and a disc changer 1j, for example. In this embodiment, the workpiece is retained by a disc 1i1.

The control device 1a is a device for controlling the dental processing machine 1. The communication device 1b is a device for exchanging data with other devices, such as the operating device 11. The spindle 1c is a device for holding and rotating a tool. The clamp 1d is a retainer for retaining a disc that holds a workpiece. The rotary support mechanism 1e is a mechanism for supporting the clamp at a predetermined angle with respect to the spindle 1c. The rotary support mechanism 1e may rotate the clamp, for example, about a predetermined X-axis and about a predetermined Y-axis. The 3-axis moving mechanism If is a mechanism for moving the rotary support mechanism 1e along three axes, a lateral axis (X-axis), a front-rear axis (Y-axis), and a vertical axis (Z-axis). The tool magazine 1g is a container unit for accommodating a plurality of tools 1g1 that are to be attached to the spindle 1c. In the tool magazine 1g, predetermined locations for accommodating the tools 1g1 are allocated so that each of the tools 1g1 can be accommodated in each respective location, and the locations for accommodating the tools 1g1 are provided with code numbers assigned thereto for identifying the tools 1g1. The tool changer 1h is a mechanism for changing a tool accommodated in the tool magazine 1g with a tool attached to the spindle 1c. The disc rack 1i is a container unit for accommodating a plurality of discs 1i1 (also referred to as holders) that retain workpieces. In the disc rack 1i, predetermined locations for accommodating the discs 1i1 are allocated so that each of the discs 1i1 can be accommodated in each respective location, and the locations for accommodating the discs 1i1 are provided with code numbers assigned thereto for identifying the discs 1i1.The disc changer 1j is a mechanism in the disc rack 1i for exchanging a disc 1i1 to be attached to the clamp 1d.

### Disc 1i1

The dental processing machine 1 uses various types of materials for the workpiece retained in the disc 1i1. The workpiece may be, for example, ceramic material (for example, zirconia ceramic material), resin material, glass material, metal material, and wax material. In addition, the workpiece may be in various kinds of shapes, such as a disc shape and a block shape.

### Workpiece

The workpiece may be attached to, for example, a disc 1i1 so that it can be mounted to the clamp 1d. The workpiece may be attachable to and detachable from the disc 1i1. The workpiece has a sufficient size for the product. With the workpiece, a certain number of products can be formed by the dental processing machine 1. For this reason, after an unprocessed workpiece is attached to the disc 1i1, for example, a certain number of processing programs CP are executed for the workpiece fitted to the disc 1i1, to shape a certain number of products. The workpiece is kept attached to the disc 1i1 as the processing continues, until the workpiece is almost fully used. When the workpiece is almost fully used, the workpiece is detached from the disc 1i1, and another new workpiece is attached to the disc 1i1.

Thus, the workpiece attached to the disc 1i1 may be either an unprocessed product, or in a state of being used, from which a certain number of products have already been produced.

The three-dimensional shape of the workpiece attached to the disc 1i1 may be recorded as, for example, CAD data. The shapes of the processed products may be managed by three-dimensional data, such as STL files (stereolithography files) recorded in a so-called STL (stereolithography) format.

The disc 1i1 may be marked with an identifier, for example. The identifier (also referred to as "disc ID") may be a two-dimensional code, a one-dimensional code, a mark, a numeral, a pattern, or an image, which is directly printed or engraved on the disc 1i1. The dental processing machine 1 may be equipped with a reader for reading such an identifier of the disc 1i1. Such a reader may be, for example, one that identifies the disc 1i1 based on an image of the identifier captured by a camera provided for the dental processing machine 1.

The dental processing machine 1 is furnished with monitoring devices for detecting the statuses of various parts thereof, such as sensors 1k1 and cameras 1k2. The sensors 1k1 may include: such sensors as encoders, ammeters, and voltmeters that are mounted to various parts including the rotary support mechanism, the tool changer, and the disc changer, and a motor for rotating the spindle; a temperature sensor for obtaining an environment temperature during processing; and a sensor for detecting the opening and closing of a cover of the housing. The cameras 1k2 may include a plurality of cameras disposed in the housing so that, for example, the state of the disc 1i1 and the workpiece 1i2 that are supported by the clamp 1d and the state of various parts such as the tool magazine 1g and the disc rack 1i can be shown with the tool mounted to the spindle 1c.

The dental processing machine 1 includes a control device 1a. The control device 1a performs various processes for the dental processing machine 1. The control device 1a may be implemented by, for example, a computer that is operated according to a predetermined program. For example, the configurations and operations of the control device 1a may be embodied as a database that stores various data embodied by a computer, a data structure, or a processing module that performs predetermined computing processes according to a predetermined program, or as part of the database, the data structure, or the processing module.

### Processing by Dental Processing Machine 1

The workpiece is retained by the disc 1i1. The disc 1i1 is mounted to the clamp 1d. The clamp 1d is moved and rotated by the rotary support mechanism 1e and the 3-axis moving mechanism If. A tool 1g1 is attached to the spindle 1c. The spindle 1c, the rotary support mechanism 1e, and the 3-axis moving mechanism If are controlled by the control device 1a. The rotary support mechanism 1e and the 3-axis moving mechanism If are controlled so that the tool 1g1 attached to the spindle 1c hits the workpiece fitted to the disc 1i1 at a desired position in a desired direction. The spindle 1c, the rotary support mechanism 1e, and the 3-axis moving mechanism If are controlled so that the workpiece retained by the disc 1i1 is milled into a desired shape. Such a milling process is controlled by the processing programs CP1 read by the firmware 1a3 of the dental processing machine 1.

In this embodiment, the control device 1a of the dental processing machine 1 includes, for example, a memory storage unit 1a1 and a processing unit 1a2, as illustrated in Fig. 2. The firmware 1a3 is installed in the control device 1a. The firmware 1a3 is programmed so that the dental processing machine 1 performs predetermined operations.

The memory storage unit 1a1 includes a first memory storage section 1a11, a second memory storage section 1a12, a third memory storage section 1a13, a fourth memory storage section 1a14, a fifth memory storage section 1a15, and a sixth memory storage section 1a16.

The first memory storage section 1a11 stores a plurality of processing programs CP1 that are to be executed by the dental processing machine 1. Herein, the term "processing program CP1" refers to a processing program stored in the first memory storage section 1a11 of the dental processing machine 1.

The second memory storage section 1a12 stores a job list JL1 that stores the order of the processing programs CP1 to be executed by the dental processing machine 1.

The third memory storage section 1a13 stores a log file LF1 (also referred to as a log file) that records log data of the processing programs CP1.

The fourth memory storage section 1a14 stores a master file for determining the error state of the dental processing machine 1, and error codes for identifying the error states, in association with each other.

The fifth memory storage section 1a15 stores the initial state (i.e., the default state) of the dental processing machine 1, such as the initial states of the spindle 1c, the clamp 1d, the rotary support mechanism 1e, the 3-axis moving mechanism If, the tool changer 1h, and the disc changer 1j of the dental processing machine 1.

The sixth memory storage section 1a16 stores information about the tools 1g1 accommodated in the tool magazine 1g, the locations in which the tools 1g1 are accommodated, the discs 1i1 accommodated in the disc rack 1i, and the workpieces retained by the discs 1i1.

The processing unit 1a2 executes required processes according to the firmware 1a3. The processing unit 1a2 includes a first processing section 1a21, a second processing section 1a22, a third processing section 1a23, a fourth processing section 1a24, a fifth processing section 1a25, a sixth processing section 1a26, and a seventh processing unit 1a27. Each of the processes that are executed by these processing sections will be described below. It should be noted that only part of the processes executed by the dental processing machine 1 is illustrated in Fig. 2, and not all the processes executed by the dental processing machine 1 are illustrated therein.

The first processing section 1a21 is configured to cause the first memory storage section 1a11 to store the processing programs CP sent from the operating device 11, according to an instruction from the operating device 11. Herein, a processing program CP that is stored in the first memory storage section 1a11 is referred to as a "processing program CP1".

The second processing section 1a22 is configured to create a job list JL1 and store the job list JL1 in the second memory storage section 1a12, according to an instruction from the operating device 11.

The third processing section 1a23 is configured to control the dental processing machine 1 according to the processing programs CP1.

The fourth processing section 1a24 is configured to detect an error in the dental processing machine 1. The error in the dental processing machine 1 may be detected by, for example, a matching process in which the data obtained by the sensors 1k1 and the cameras 1k2 are matched against the master file stored in the fourth memory storage section 1a14.

The fifth processing section 1a25 is configured to perform data communication with other devices such as the operating device 11 via the communication device 1b. The dental processing machine 1 receives, for example, processing programs CP from the operating device 11. The dental processing machine 1 is configured to send the record of execution of the processing programs CP1, the status of the dental processing machine 1, the data acquired by the sensors 1k1 and the cameras 1k2, the error codes, and the like, to the operating device 11.

The sixth processing section 1a26 is configured to bring the dental processing machine 1 back to the initial state. In the initial state of the dental processing machine 1, the tool 1g1 is returned to a predetermined location in the tool magazine 1g. The disc 1i1 is also returned to a predetermined location in the disc rack 1i. This process may also be called an initial state-returning process. By this process, the spindle 1c, the clamp 1d, the rotary support mechanism 1e, the 3-axis moving mechanism If, and so forth are returned to predetermined locations and states.

The seventh processing section 1a27 is configured to set reference locations for controlling these components. For example, after the spindle 1c, the clamp 1d, the rotary support mechanism 1e, and the 3-axis moving mechanism If have been returned to the predetermined locations, the reference locations for controlling them are set based on detection by the sensors. Such a process is commonly referred to as a zero tracking process, or zero point calibration.

The block diagram of Fig. 2 lists constituent components of the dental processing machine 1. It should be noted, however, that the constituent components listed in the block diagram of Fig. 2 are only part of the dental processing machine 1, and the dental processing machine 1 is not limited to including only the constituent components listed in the block diagram of Fig. 2.

For example, it is possible that the job list storing the order of the processing programs CP1 to be executed by the dental processing machine 1, the log file recording the log data of the processing programs CP1, the master file for determining the error state of the dental processing machine 1, the error codes for identifying the error state, and so forth may be stored in the operating device 11. This means that the dental processing machine 1 may not be provided with the second memory storage section 1a12, the third memory storage section 1a13, or the fourth memory storage section 1a14.

In addition, the spindle 1c, the clamp 1d, the rotary support mechanism 1e, the 3-axis moving mechanism If, the tool magazine 1g, the tool changer 1h, the disc rack 1i, the disc rack 1i, and the disc changer 1j, for example, are enclosed in a housing. The housing is configured so that its cover can be opened and closed as appropriate.

### Processing Program CP1

In this embodiment, the processing programs CP1 are the same as the foregoing processing programs CP. However, as described previously, a job ID is assigned to each of the processing programs CP1 when it is sent from the operating device 11 to the dental processing machine 1. In this respect, the processing program CP that is stored in the first memory storage section 1a11 (see Fig. 2) of the dental processing machine 1 is referred to as a "processing program CP1", where appropriate, in the present specification.

### Job List JL1

The job list JL1 is a list that specifies the order in which the dental processing machine 1 executes the processing programs CP1, as mentioned previously. Here, the order in which the processing programs CP1 are executed is specified in the job list JL1. Note that the order in which the processing programs CP1 are to be executed is determined by the operating device 11. For example, the order in which the dental processing machine 1 executes the processing programs CP1 may be determined to be the order in which the operating device 11 has sent the processing programs CP1 to the dental processing machine 1. In this case, the job list JL1 is created such that the order in which the dental processing machine 1 executes the processing programs CP1 is determined to be the order in which the operating device 11 has sent the processing programs CP1 to the dental processing machine 1.

### Log File LF1

The dental processing machine 1 creates a log file LF1 that records log data of the processing programs. The log file LF1 records events such as start, stop, pause, resumption, cancellation, and end of execution of the processing program recorded in the job list, and the times at which these events occurred. The log file LF1 also records a predetermined error code if an error occurs during execution of a processing program recorded in the job list. In this embodiment, because a job ID is assigned to each of the processing programs CP1 sent to the dental processing machine 1, the job list JL1 and the log data of the log file LF1 may contain the job ID.

### Firmware 1a3

Firmware 1a3 controls the dental processing machine 1. The firmware 1a3 includes processing modules for executing various processes of the above-described processing unit 1a2. Hereinafter, the functions of the firmware 1a3 of the dental processing machine 1 will be described. The firmware 1a3 may be programmed to implement the following functions as processes performed by a computer.

The firmware 1a3 instructs the dental processing machine 1 to communicate with the operating device 11 and cause the first memory storage section 1a11 to store the processing programs CP1.

The firmware 1a3 instructs the dental processing machine 1 to create a job list JL1.

The firmware 1a3 instructs the dental processing machine 1 to execute the processing programs CP1 stored in the first memory storage section 1a11 in sequence according to the job list JL1 stored in the second memory storage section 1a12.

The firmware 1a3 also instructs the dental processing machine 1 to create a log file LF1.

For example, the firmware 1a3 instructs the dental processing machine 1 to record the start time and end time of execution of each of the processing programs CP1 in the log file LF1. The firmware 1a3 also instructs the dental processing machine 1 to record, in the log file LF1, the time at which a tool is attached to the spindle 1c, the time at which the tool is returned to the tool magazine 1g, the time at which the disc 1i1 is held by the clamp 1d, the time at which the disc 1i1 is returned to the disc rack 1i, etc.

For example, the firmware 1a3 instructs the dental processing machine 1 to create the job list JL1 so that the processing programs CP1 can be executed in the order in which the processing programs CP1 have been sent from the operating device 11 to the dental processing machine 1. As described previously, when the job list JL1 is provided with a record column, the status of each of the processing programs CP1 is recorded in the record column. In this case, the processing unit 1a2 of the dental processing machine 1 may be configured to execute the processing programs CP1 sequentially according to the job list JL1. It is possible that, in place of the job list JL1, the dental processing machine 1 may store a plurality of processing programs CP1 in the first memory storage section 1a11 of the dental processing machine 1 so that the processing programs CP1 are associated with the order in which they are to be executed by the dental processing machine 1.

The firmware 1a3 provides the function of detecting an error in the dental processing machine 1. The firmware 1a3 is programmed to, if an error is detected, instruct the dental processing machine 1 to execute a process corresponding to the error. For example, the firmware 1a3 is programmed to, if an error is detected, instruct the dental processing machine 1 to execute a predetermined process based on the error code of the detected error. The firmware 1a3 allows the dental processing machine 1 to temporarily suspend the processing program CP1 based on the error code of the detected error. Next, based on the error code, it is determined whether or not the error is a self-recoverable error in the dental processing machine 1. Then, if the error is a self-recoverable error in the dental processing machine 1, error recovery is attempted. If the error is self-recovered and the error is resolved, the dental processing machine 1 resumes execution of the processing programs CP1. Based on the error code of the detected error, the dental processing machine 1 may be stopped and the initial state-returning process is executed to bring the dental processing machine 1 to a predetermined initial state. The firmware 1a3 allows the zero point calibration to be executed in the initial state, and thereafter instructs the dental processing machine 1 to resume execution of the processing programs CP1, when restarting the dental processing machine 1.

The firmware 1a3 provides the function of notifying the operating device 11 of data concerning the status of the dental processing machine 1. The data concerning the status of the dental processing machine 1 may include: times of start, stop, pause, resumption, cancellation, and end of the processing program CP1; data acquired by the sensors 1k1 and the cameras 1k2 provided for the dental processing machine 1; and error codes, for example. The firmware 1a3 allows the dental processing machine 1 to send these data to the operating device 11 at predetermined timing. The firmware 1a3 also allows the dental processing machine 1 to send these data to the operating device 11 in response to a request from the operating device 11.

Note that the dental processing machine 1 has a limited memory storage capacity. For this reason, the processing programs CP1, the log file LF1, the job list JL1, etc. are deleted as appropriate at predetermined timing. For example, the log file LF1 may be deleted after execution of the processing program CP1 has been completed and the data acquired during the execution of the processing program CP1 have been transmitted to the operating device 11.

In this embodiment, each of the processing programs CP contains the comment line S1 recording a data group containing the file ID and the data of predetermined items concerning the material or product to be processed. For this reason, the firmware 1a3 of the dental processing machine 1 may be configured to analyze the comment line S1 of the processing program CP and to acquire the data group containing the file ID and the data of predetermined items concerning the material or product to be processed. Therefore, the job list JL1 and the log data of the log file LF1 created by the dental processing machine 1 are allowed to contain the file ID acquired from the comment line S1 of the processing program CP as appropriate. Moreover, in this embodiment, a job ID is assigned to the processing program CP when the processing program CP is sent from the operating device 11 to the dental processing machine 1. Therefore, the job list JL1 and the log data of the log file LF1 are allowed to contain the job ID as appropriate.

Some embodiments of the dental processing machine 1 and the operating system for the dental processing machine 1 proposed herein have been described above. Hereinbelow, embodiments of the operating device 11 and the operating system 10 for the dental processing machine 1 will be described further according to the present disclosure.

As illustrated in Fig. 1, an embodiment of the dental processing machine-operating device 11 proposed herein includes a memory storage unit A, a processing unit B, a processing unit C, a processing unit D, and a processing unit E.

The memory storage unit A contains processing programs CP each specifying a processing procedure executed by the dental processing machine 1, and also stores milling files 21a associated with milling file IDs.

The processing unit B is configured to send the processing program CP contained in the milling file 21a associated with the milling file ID to the dental processing machine 1.

In order to identify the processing program CP sent to the dental processing machine 1 by the processing unit B, the processing unit C is configured to prepare a different job ID from the milling file ID and associate the prepared job ID with the processing program CP that has been sent to the dental processing machine 1.

With the operating device 11 proposed herein, a job ID for identifying the processing program CP sent to the dental processing machine 1 is prepared separately from the milling file ID, and the prepared job ID is associated with the processing program CP. Thus, each of the processing programs CP sent to the dental processing machine 1 can be identified using both the milling file ID and the job ID, which is prepared separately from the milling file ID. This makes it possible to more specifically identify the processing program CP executed by the dental processing machine 1. For example, even when the same processing program CP is resent from the operating device 11 to the dental processing machine 1, the resent processing program CP can be identified by the job ID. Moreover, because the processing program CP is associated with the milling file ID, it is possible to identify the milling file 21a that contains the processing program CP. This makes it possible to more specifically identify the processing program CP executed by the dental processing machine 1.

The processing unit D is configured to create a log file that records the milling file ID and the job ID for the processing program CP. As a result, the milling file ID and the job ID are contained in the log data. Therefore, the processing program CP and the milling file 21a that have been sent to the dental processing machine 1 can be identified from the log data. This makes it possible to more specifically identify the processing program CP executed by the dental processing machine 1.

In addition, the milling file 21a may further contain data of predetermined items concerning the material to be processed. The processing unit E of the operating device 11 may be configured to create processing information data PD in which the data of predetermined items concerning the material to be processed are associated with a job ID that is assigned when the processing program CP contained in the milling file 21a is sent to the dental processing machine 1. In this case, the processing information data PD are created such that the job ID is associated with the data of predetermined items concerning the material to be processed. In other words, every time the dental processing machine 1 executes a processing program CP, the data of predetermined items concerning the material to be processed are recorded based on the job ID. As a result, more detailed data analysis concerning the material to be processed is possible every time the dental processing machine 1 executes a processing program CP, in other words, for each of the jobs identified by a job ID.

The dental processing machine-operating system 10 proposed herein includes the server 12 data-communicably connected to the operating device 11.

Here, the operating device 11 may include, for example, a processing unit F configured to send log data containing a milling file ID and a job ID to the server 12. In this case, the log data may be sent as a log file LF recording a plurality of log data.

The server 12 may include a recording unit 12a for recording the log data.

The operating device 11 may also include a processing unit G configured to send, to the server 12, processing information data PD in which a job ID is associated with data of predetermined items concerning the material to be processed. In this case, the server 12 may include a recording unit 12a for recording processing information data PD. In the operating system 10 shown in Fig. 1, such a recording unit 12a of the server 12 is composed of the database 12a of the server 12.

In this embodiment, the CAM software-equipped device 21 functions as a processing program-creating device proposed herein, as illustrated in Fig. 1. Here, the CAM software-equipped device 21 includes a processing program storage unit 101, a material data storage unit 102, a comment insertion process unit 103, and an output process unit 104.

The processing program storage unit 101 is configured to store a processing program CP specifying a processing procedure to be performed by the dental processing machine 1.

The material data storage unit 102 is configured to store data of predetermined items concerning the material or product to be processed by the processing program CP stored in the processing program storage unit 101.

The comment insertion process unit 103 is configured to prepare a file ID, and to insert a comment line S1 containing the prepared file ID and the data of predetermined items stored in the material data storage unit 102 into the processing program CP.

Here, the comment insertion process unit 103 may be configured to prepare a file ID for identifying the processing program CP stored in the processing program storage unit 101, and to insert a comment line S1 containing the prepared file ID into the processing program CP.

Alternatively, the comment insertion process unit 103 may be configured to insert a comment line S1 containing the data of predetermined items stored in the material data storage unit 102 into the processing program CP.

The output process unit 104 is configured to output the processing program CP stored in the processing program storage unit 101 to a predetermined memory storage area. In this case, the comment insertion process unit 103 may be configured to insert the comment line S1 into the processing program CP when the processing program CP is output by the output process unit 104.

In another embodiment, the comment insertion process unit 103 may be configured to prepare a file ID, and to insert a first comment line containing the prepared file ID and a second comment line containing the data of predetermined items stored in the material data storage unit 102, into the processing program CP. In this case, the comment insertion process unit 103 may be configured to insert the first comment line and the second comment line into the processing program CP when the processing program CP is output by the output process unit 104.

The foregoing describes examples of embodiments in which processing information PI containing a file ID (milling file ID) for identifying a milling file 21a and data of predetermined items concerning the material to be processed is recorded in the comment line S1 of the processing program CP. However, such embodiments do not limit the way of associating the file ID, the data of predetermined items concerning the material to be processed, and the processing program CP and the milling file 21a with each other. For example, it is possible to additionally create reference data for associating the file ID, the data of predetermined items concerning the material to be processed, and the processing program CP and the milling file 21a with each other. Furthermore, it is also possible to create reference data for associating the file ID, the data of predetermined items concerning the material to be processed, the processing program CP, and the job ID with each other.

Some embodiments of the dental processing machine 1 and the operating system for the dental processing machine 1 proposed herein have been described above. Hereinbelow, embodiments of the operating device 11 for the dental processing machine 1 will be described further according to the present disclosure.

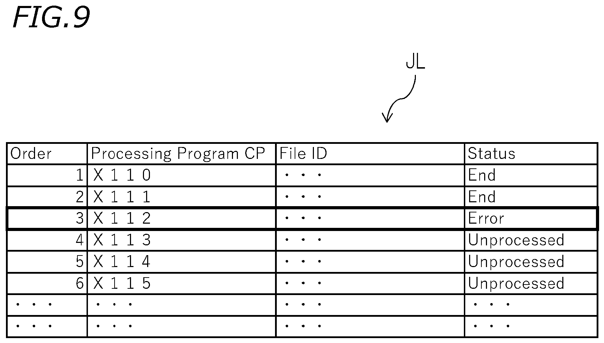

Fig. 9 shows an example of a job list JL that is displayed on a display of the operating device 11. For such a job list JL, a corresponding job list JL1 is similarly retained also in the dental processing machine 1. The example shown in Fig. 9 illustrates the state in which an error is detected while the third processing program CP in the job list JL is being executed. At this time, the dental processing machine 1 is stopped, and the fourth to sixth processing programs CP have not yet been processed.

When, for example, an error occurs while the dental processing machine 1 is executing a processing program CP as shown in Fig. 9, the dental processing machine 1 stops temporarily. The error may occur when a problem arises with the dental processing machine 1, but the error may also occur when a problem arises with the processing program CP. Even in the case where a problem arises with the dental processing machine 1, the problem may be a false detection in the dental processing machine 1. When an error occurs, the dental processing machine 1 stops. When the dental processing machine 1 is resumed, the dental processing machine 1 is returned to a predetermined initial state by a predetermined initialization process. In the initialization process, the previously-mentioned initial state-returning process is executed, for example, and a zero tracking process or the like may also be executed. Among the errors that occur in the dental processing machine 1, some of the errors do not require the initialization process. Whether the initialization process is required or not may be determined from an error code that is extracted based on, for example, the data obtained in the dental processing machine 1 when the error occurs.

The storage capacity of the memory storage device incorporated in the dental processing machine 1 is not so large. When the initialization process as mentioned above is executed, the dental processing machine 1 may in some cases be configured to erase data. For example, the dental processing machine 1 may erase data such as the processing program CP1 that is being executed and the job list JL1. This brings the dental processing machine 1 back to the initial state. In such a case, to resume the processing by the dental processing machine 1, the operator of the operating device 11 for operating the dental processing machine 1 needs to sequentially shift the information of the order of the processing programs CP that are to be executed by the dental processing machine 1.

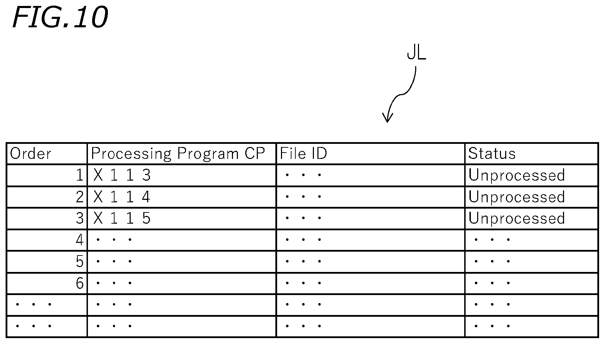

In the condition shown in Fig. 9, it is assumed that, for example, the processing programs CP listed in the fourth to sixth rows before resuming the process are to be executed sequentially. In that case, the operator of the operating device 11 for operating the dental processing machine 1 may send the pieces of information of the fourth to sixth processing programs CP in the job list JL in that order. Fig. 10 shows another example of the job list JL displayed on the display of the operating device 11. Fig. 10 is a view showing the job list JL that is created when sequentially shifting the information of the processing programs CP that have been recorded as the fourth to sixth ones before resumption. For such a job list JL, a corresponding job list JL1 is similarly created also in the dental processing machine 1. As a result, the dental processing machine 1 receives, from the operating device 11, the processing programs CP that have been recorded as the fourth to sixth ones before resumption sequentially, and executes them sequentially.

By sequentially shifting the information of the order of the processing programs CP that are to be executed by the dental processing machine 1, the job list JL1 of the dental processing machine 1 is created. According to the job list JL1 prepared for resumption, the dental processing machine 1 receives the processing programs CP from the operating device 11 sequentially to resume the processing. Herein, an operating device 11 that simplifies the operations performed by an operator to resume the dental processing machine 1 is proposed.

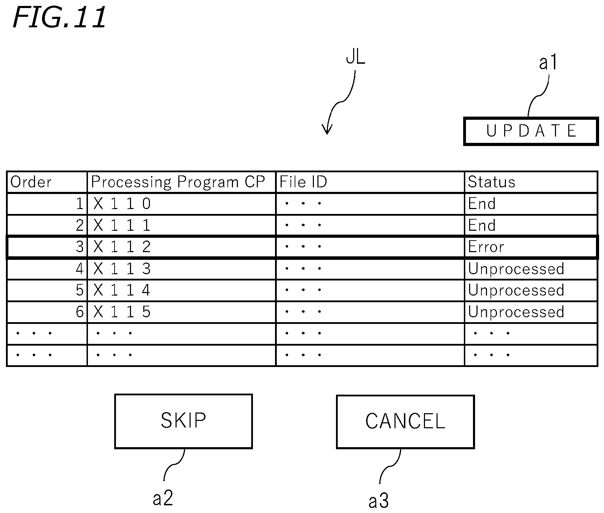

As illustrated in Fig. 1, an embodiment of the operating device 11 for operating the dental processing machine 1 includes a first communication unit 121, a first list storage unit 122, a first status storage unit 123, a first error detection unit 124, a first skipping process unit 125, a first update process unit 126, and a first display process unit 127. Fig. 11 shows an example of a job list JL displayed on a display of the operating device 11 proposed herein that is equipped with the first skip processing unit 125. Note that the job list JL displayed on the display is not limited to the example shown in Fig. 11.

The first communication unit 121 is configured to mutually communicate data between the operating device 11 and the dental processing machine 1. The operating device 11 performs data communication with the dental processing machine 1 through the first communication unit 121.

The first list storage unit 122 stores a job list JL in which a plurality of processing programs CP each defining a processing procedure performed by the dental processing machine 1 are associated with and an order in which the plurality of processing programs CP are to be executed. The first list storage unit 122 stores the job list JL. As illustrated in Fig. 11, for example, the operating device 11 may be configured to allow the job list JL stored in the first list storage unit 122 to be displayed on a display as appropriate.

The first status storage unit 123 is configured to acquire, from the dental processing machine 1, execution statuses of the plurality of processing programs CP contained in the job list JL, and to store the execution statuses of the plurality of processing programs CP. The execution statuses of the processing programs CP include, for example, statuses such as Start, Stop, Pause, Resume, Cancel, and End. For example, the operating device 11 may display the execution statuses of the processing programs CP contained the job list JL in the status column of the job list JL.

The first error detection unit 124 is configured to detect an error in the dental processing machine 1. With the first error detection unit 124, the operating device 11 is able to detect an error in the dental processing machine 1. When an error is detected in the dental processing machine 1 while the plurality of processing programs CP contained in the job list JL are being executed sequentially, the status of the processing program CP that caused the error may be displayed as "Error", for example, as shown in Fig. 11. Fig. 11 illustrates the state in which an error occurred while the third processing program CP in the job list JL was being executed.

The first skipping process unit 125 is configured to, if the first error detection unit 124 detects an error while a plurality of processing programs CP contained in a job list JL are being executed sequentially, end one of the processing programs CP that is currently being executed when the error is detected, based on the execution statuses of the plurality of processing programs CP stored in the first status storage unit 123, and to cause the dental processing machine 1 to execute another one of the processing programs CP that is to be executed next after the preceding one of the processing programs CP, according to the order specified in the job list JL.

As illustrated in Fig. 11, for example, let us assume that, in such a process of the first skipping process unit 125, an error is detected when the third processing program CP is executed while the first to sixth processing programs CP contained in the job list JL are being executed sequentially. In this case, when the process of the first skipping process unit 125 is executed, the dental processing machine 1 ends the third processing program CP that is being executed when the error is detected, and executes the fourth processing program CP that is to be executed next, according to the order specified in the job list JL.

For example, when the process of the first skipping process unit 125 is executed, an initialization process is executed for the dental processing machine 1. Alternatively, before the process of the first skipping process unit 125 is executed, the initialization process has already been executed for the dental processing machine 1 by the operation of the firmware 1a3 when an error was detected. This means that the processing program CP1 that is currently being executed, the job list JL1, and so forth are erased from the dental processing machine 1, and the dental processing machine 1 is returned to the initial state. In the process of the first skipping process unit 125, the operating device 11 restores the job list JL1 of the dental processing machine 1 based on the job list JL stored in the first list storage unit 122. Then, the operating device 11 sets the status (execution status) of the third one of the processing programs CP, in which an error was detected, to End in the job list JL. In other words, the execution of the third one of the processing programs CP that was being executed at the time of error detection is brought to an end.

According to the present invention, each of the operating device 11 and the dental processing machine 1 is provided with a job list. As just described, the process of the first skipping process unit 125 may be a process such as to set the status (execution status) of the third one of the processing programs CP in the job list JL stored in the first list storage unit 122 of the operating device 11, in which an error was detected, to End. As described above, the process of the first skipping process unit 125 may be embodied in a variety of forms.

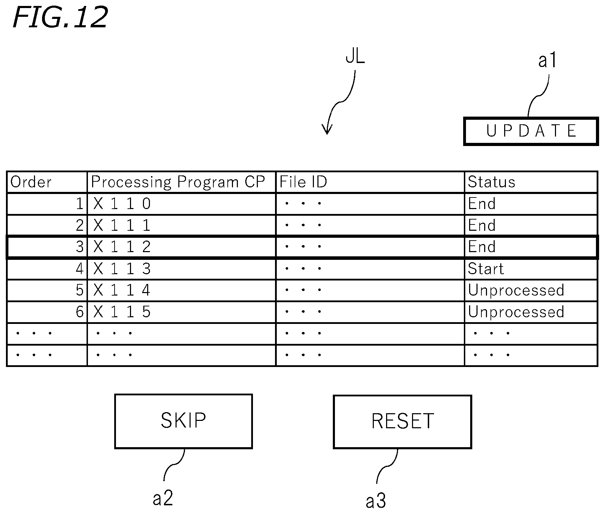

Fig. 12 shows a state in which the process of the first skip processing unit 125 has been executed. In this embodiment, the job list JL shows that execution of the third one of the processing programs CP has ended, as illustrated in Fig. 12. As a result, the job list JL1 of the dental processing machine 1 is also brought into the same state, which shows that execution of the third one of the processing programs CP has ended. As a consequence, the firmware 1a3 causes the dental processing machine 1 to execute the fourth one of the processing programs CP, which is to be executed next, according to the order specified by the job list JL. When the process of the first skipping process unit 125 is executed in this way, the operator of the operating device 11 need not sequentially shift the information of the processing programs CP that are to be executed by the dental processing machine 1 according to the order when resuming the processing by the dental processing machine 1.

Moreover, the first update process unit 126 may be configured to acquire the latest status of the dental processing machine 1 and update the execution statuses of the plurality of processing programs CP stored in the first status storage unit 123. For example, the operating device 11 communicates with the dental processing machine 1 at every predetermined time interval to obtain the data concerning the status of the dental processing machine 1. It is desirable that the latest status of the dental processing machine 1 have been obtained when an error is detected by the first error detection unit 124. With the process of the first update process unit 126, the operating device 11 acquires the latest status of the dental processing machine 1 and updates the execution statuses of the plurality of processing programs CP stored in the first status storage unit 123. As illustrated in Fig. 11, the operating device 11 may also be configured to display an operation button a1 for executing the process of the first update process unit 126 on a display that displays the job list JL.

The operating device 11 is configured to allow the first skipping process unit 125 to execute the process by performing a predetermined operation if the first error detection unit 124 detects an error. The predetermined operation may be set as desired, for example. For example, it is possible that a display prepared for the operating device 11 may display a dialog box including an operation button configured to allow the first skipping process unit 125 to execute the process. In this embodiment, as illustrated in Fig. 11, the first display process unit 127 is configured to display an operation button a2 for executing the process of the first skipping process unit 125 on the display. This embodiment is also provided with an operation button a3 for bringing the dental processing machine 1 back to the initial state. When the operation button a3 is operated, the dental processing machine 1 is brought back to the initial state, and various data, such as the processing program CP1 that is being executed and the job list JL1, are erased.

An embodiment of the operating system 10 proposed herein includes an operating device 11 as described above, a dental processing machine 1 that is mutually data-communicably connected to the operating device 11, and a server 12 that is data-communicably connected to the operating device 11.

The server 12 includes a second list storage unit 141, a second status management unit 142, a second error detection unit 143, and a second update process unit 144.

The second list storage unit 141 is configured to store a job list JL acquired from the operating device 11. The second status management unit 142 is configured to acquire execution statuses of a plurality of processing programs CP contained in the job list JL through the operating device 11, and to store the execution statuses of the plurality of processing programs CP.

This enables the server 12 to record the job list JL and the execution statuses of the processing programs CP contained in the job list JL. In this case, the server 12 may be configured to provide the job list JL and the execution statuses of the processing programs CP contained in the job list JL to an external device that is able to access the server 12.

The second error detection unit 143 is configured to detect an error in the dental processing machine 1 through the operating device 11. Such a second error detection unit 143 enables the server 12 to detect an error in the dental processing machine 1. In this case, the server 12 may be configured to notify, for example, an external device that is able to access the server 12 that an error has been detected in the dental processing machine 1.

The second update process unit 144 is configured to obtain the latest status of the dental processing machine 1 through the operating device 11. The second update process unit 144 is also configured to update execution statuses of the plurality of processing programs CP stored in the second status management unit 142. Such a second update process unit 144 enables the server 12 to obtain the latest status of the dental processing machine 1 at desired timing. In this case, the server 12 may be configured to allow an operator operating the server 12 to execute the second update process unit 144.

Moreover, the operating system 10 may further include an external device 13 data-communicably connected to the server 12 or the operating device 11.

In this embodiment, the external device 13 includes a third status management unit 161, a third error detection unit 162, a second skipping process unit 163, a second display process unit 164, and a third update process unit 165.

Here, the third status management unit 161 is configured to acquire execution statuses of a plurality of processing programs CP contained in the job list JL through the server 12 or the operating device 11, and to store the execution statuses of the plurality of processing programs CP. This enables the external device 13 to confirm the execution statuses of the processing programs CP in the dental processing machine 1. The dental processing machine 1 may also be configured to access the operating device 11 through the server 12 and acquire the execution statuses of the plurality of processing programs CP from the operating device 11.

The third error detection unit 162 is configured to detect an error in the dental processing machine 1 through the server 12 or the operating device 11. Such a third error detection unit 162 enables the external device 13 to detect an error in the dental processing machine 1.

If the third error detection unit 162 detects an error while the plurality of processing programs CP contained in the job list JL are being executed sequentially, the second skipping process unit 163 sets the execution status of a processing program CP to an End. In such a process of the second skipping process unit 163, the execution status of the one of the processing programs CP is brought to an End, which is being executed when the error has been detected, based on the execution statuses of the plurality of processing programs CP stored in the third status management unit 161. Then, the second skipping process unit 163 is configured to cause the dental processing machine 1 to execute another one of the processing programs CP that is to be executed next after the previous one of the processing programs CP, according to the order specified in the job list JL. As just described, the operating system 10 proposed herein enables the external device 13 to perform a so-called skipping process. More specifically, the operating system 10 allows the external device 13 to operate the so-called skipping process, in which the dental processing machine 1 executes a processing program CP that is to be executed next after the pertinent processing program CP according to the order specified in the job list JL. The process of the second skipping process unit 163, as well as the first skipping process unit 125, may also be embodied in a variety of forms.

The external device 13 may be configured to allow the second skipping process unit 163 to execute the process by performing a predetermined operation if the third error detection unit 162 detects an error. For example, the second display process unit 164 is configured to display an operation button for executing the process of the second skipping process unit 163 on a predetermined display if the third error detection unit 162 detects an error. Here, the second display process unit 164 causes, for example, the display prepared for the external device 13 to display a dialog box having an execution button configured to allow the second skipping process unit 163 to execute the process. Note that the operation for executing the process of the second skipping process unit 163 is not limited to such an operation with the operation button, but may be implemented by any suitable means.

The third update process unit 165 is configured to obtain the latest status of the dental processing machine 1 through the server 12 or the operating device 11. This enables the external device 13 to obtain the latest status of the dental processing machine 1.

The external device 13 may be configured to display, for example, a job list JL such as shown in Figs. 11 and 12 on a predetermined display. The job list JL may be provided with an operation button a2 for executing the second skipping process unit 163, an operation button a3 for executing the process for bringing the dental processing machine 1 back to the initial state, and an operation button a1 for executing the process of the third update process unit 165, for example. The external device 13 as described above can operate the dental processing machine 1 through the server 12 and the operating device 11. This means that the dental processing machine 1 can be operated from a remote location, for example, via a network. In addition, the server 12 may be data-communicably connected to a plurality of operating devices 11. The operating device 11 is also configured to be able to operate a plurality of dental processing machines 1.

Accordingly, the external device 13 may be configured to remotely operate a large number of dental processing machines 1 through the server 12 and the plurality of operating devices 11. Even if an error occurs in any of the dental processing machines 1, the external device 13 described above allows the operator to easily carry out the operation for resuming the dental processing machine 1 because the external device 13 includes the above-described second skipping process unit 163. Therefore, if an error is detected in the dental processing machine 1, it is easy for the operator to resume the processing performed by the processing programs CP in the dental processing machine 1 smoothly.

Various embodiments of the dental processing machine-operating device, the dental processing machine-operating device and the dental processing machine-operating system proposed in this disclosure have been described hereinabove. It should be understood, however, that the dental processing machine-operating device, the dental processing machine-operating method and the dental processing machine-operating system proposed in this disclosure are not limited to the embodiments described above. Various modifications and alterations may be made to the embodiments of the dental processing machine-operating device, the dental processing machine-operating method and the dental processing machine-operating system proposed herein, within the scope of the amended claims.

### REFERENCE SIGNS LIST

- 1: Dental processing machine
- 10: Operating system
- 11: Operating device
- 12: Server
- 12a: Database (recording unit)
- 13: External device
- 21: CAM software-equipped device
- 21a: Milling file
- 22: CAD software-equipped device
- 22a: 3D model file
- 101: Processing program storage unit
- 102: Material data storage unit
- 103: Comment insertion process unit
- 104: Output process unit
- 121: First communication unit
- 122: First list storage unit
- 123: First status storage unit
- 124: First error detection unit
- 125: First skipping process unit
- 126: First update process unit
- 127: First display process unit
- 141: Second list storage unit
- 142: Second status management unit
- 143: Second error detection unit
- 144: Second update process unit
- 161: Third status management unit
- 162: Third error detection unit
- 163: Second skipping process unit
- 164: Second display process unit
- 165: Third update process unit

## Claims

1. A dental processing machine-operating system (10) wherein said dental processing is dental prosthesis milling, including
a dental processing machine-operating device (11) for operating a dental processing machine (1), the operating device (11) comprising:
a first list storage unit (122) for storing a job list (JL) in which a plurality of processing programs (CP), each defining a processing procedure performed by the dental processing machine (1), are associated with an order in which the plurality of processing programs (CP) are to be executed;
a first status storage unit (123) for acquiring, from the dental processing machine (1), execution statuses of the plurality of processing programs (CP) contained in the job list (JL), and storing the execution statuses of the plurality of processing programs (CP); and a first error detection unit (124) for detecting an error in the dental processing machine (1); **characterized in that**
the dental processing machine-operating system (10) further including
the dental processing machine (1), mutually data-communicably connected to the operating device (11);
the operating device (11) further comprising
a first skipping process unit (125) configured to, if the first error detection unit (124) detects an error while the plurality of processing programs (CP) contained in the job list (JL) are being executed sequentially, set the execution status of one of the processing programs (CP) that is currently being executed when the error is detected to an end, based on the execution statuses of the plurality of processing programs (CP) stored in the first status storage unit (123), and to cause the dental processing machine (1) to execute another processing program (CP) that is to be executed next after the one of the processing programs (CP), according to the order specified in the job list (JL),
the dental processing machine (1) being configured to
store processing programs being sent from the operating device (11) and a job list specifying an order in which a plurality of processing programs is to be executed,
execute the processing programs in sequence according to the job list,
be stopped when an error occurs, and
execute an initialization process when the dental processing machine (1) is resumed, to erase the processing programs and the job list from the dental processing machine (1), and
the first skipping process unit (125) is configured to perform a process of causing the operating device (11) to restore the job list of the dental processing machine (1) based on the job list (JL) stored in the first list storage unit (122), and a process of causing the operating device (11) to set the execution status of the one of the processing programs (CP), in which an error was detected, to "End" in the job list.

2. The dental processing machine-operating system (10) according to claim 1, wherein the dental processing machine-operating device (11) further comprising a first update process unit (126) for acquiring a latest status of the dental processing machine (1) and updating the execution statuses of the plurality of processing programs (CP) stored in the first status storage unit (123).

3. The dental processing machine-operating system (10) according to claim 1 or 2, wherein, if the first error detection unit (124) detects an error, a predetermined operation is performed to allow a process of the first skipping process unit (125) to be executed.

4. The dental processing machine-operating system (10) according to claim 3, wherein the dental processing machine-operating device (11) further comprising a first display process unit (127) for displaying an operation button for executing the process of the first skipping process unit (125) on a predetermined display device.

5. A dental processing machine-operating system (10) according to any one of claims 1 to 4; further including
a server (12), data-communicably connected to the operating device (11), the server (12) comprising:
a second list storage unit (141) for storing the job list (JL) acquired from the operating device (11); and
a second status management unit (142) for acquiring execution statuses of a plurality of processing programs (CP) contained in the job list (JL) through the operating device (11), and storing the execution statuses of the plurality of processing programs (CP).

6. The dental processing machine-operating system (10) according to claim 5, wherein the server (12) further comprises a second error detection unit (143)) for detecting an error in the dental processing machine (1) through the operating device (11).

7. The dental processing machine-operating system (10) according to claim 5 or 6, further comprising a second update process unit (144) for acquiring a latest status of the dental processing machine (1) through the operating device (11), and updating the execution statuses of the plurality of processing programs (CP) stored in the second status management unit (142).

8. The dental processing machine-operating system (10) according to any one of claims 5 to 7, further comprising:
an external device (13), data-communicably connected to the server (12) or the operating device (11), and wherein
the external device (13) includes a third status management unit (161) for acquiring execution statuses of a plurality of processing programs (CP) contained in the job list (JL) through the server (12) or the operating device (11), and storing the execution statuses of the plurality of processing programs (CP).

9. The dental processing machine-operating system (10) according to claim 8, wherein the external device (13) further comprises a third error detection unit (162) for detecting an error in the dental processing machine (1) through the server (12) or the operating device (11).

10. The dental processing machine-operating system (10) according to claim 8 or 9, wherein the external device (13) includes a second skipping process unit (163) configured to, if the third error detection unit (162) detects an error while the plurality of processing programs (CP) contained in the job list (JL) are being executed sequentially, set the execution status of one of the processing programs (CP) that is currently being executed when the error is detected to an end, based on the execution statuses of the plurality of processing programs (CP) stored in the third status management unit (161), and to cause the dental processing machine (1) to execute another processing program (CP) that is to be executed next after the one of the processing programs (CP), according to the order specified in the job list (JL).

11. The dental processing machine-operating system (10) according to claim 10, wherein, if the third error detection unit (162) detects an error, a predetermined operation is performed to allow a process of the second skipping process unit (163) to be executed.

12. The dental processing machine-operating system (10) according to claim 11, further comprising a second display process unit (164) for displaying an operation button for executing the process of the second skipping process unit (163) on a predetermined display device if the third error detection unit detects an error.

13. The dental processing machine-operating system (10) according to any one of claims 8 to 12, further comprising a third update process unit (165) for acquiring a latest status of the dental processing machine (1) through the server (12) or the operating device (11).

14. A dental processing machine-operating method for operating a dental processing machine (1), wherein said dental processing is dental prosthesis milling, the operating method comprising the steps of:
storing, in an operating device (11), a job list (JL) in which a plurality of processing programs (CP), each defining a processing procedure performed by the dental processing machine (1), are associated with an order in which the plurality of processing programs (CP) are to be executed;
acquiring, by the operating device (11), from the dental processing machine (1), execution statuses of the plurality of processing programs (CP) contained in the job list (JL), and storing the execution statuses of the plurality of processing programs (CP); and detecting, by the operating devoice (11), an error in the dental processing machine (1); **characterized by**
the step, performed by the operating device (11), if an error is detected while the plurality of processing programs (CP) contained in the job list (JL) are being executed sequentially, setting the execution status of one of the processing programs (CP) that is currently being executed when the error is detected to an end, based on the execution statuses of the plurality of stored processing programs (CP), and causing the dental processing machine (1) to execute another processing program (CP) that is to be executed next after the one of the processing programs (CP), according to the order specified in the job list (JL), the steps, performed by the dental processing machine, of
storing processing programs being sent from the operating device (11) and a job list specifying an order in which a plurality of processing programs is to be executed,
executing the processing programs in sequence according to the job list, be stopped when an error occurs, and
execute an initialization process when the dental processing machine (1) is resumed, to erase the processing programs and the job list from the dental processing machine (1), and by the steps, performed by the operating device (11), of
performing a process of causing the operating device (11) to restore the job list of the dental processing machine (1) based on the job list (JL) stored in the operating device (11), and
setting the execution status of the one of the processing programs (CP), in which an error was detected, to "End" in the job list.

## Patentansprüche

1. Dentalbearbeitungsmaschinen-Betriebssystem, wobei die Dentalbearbeitung das Fräsen von Zahnersatz ist, umfassend:
eine Dentalbearbeitungsmaschinen-Bedienvorrichtung (11) zum Bedienen einer Dentalbearbeitungsmaschine (1), wobei die Bedienvorrichtung (11) umfasst:
eine erste Listenspeichereinheit (122) zum Speichern einer Auftragsliste (JL), in der eine Vielzahl von Bearbeitungsprogrammen (CP), die jeweils einen von der Dentalbearbeitungsmaschine (1) ausgeführten Bearbeitungsvorgang definieren, einer Reihenfolge zugeordnet sind, in der die Vielzahl von Bearbeitungsprogrammen (CP) auszuführen ist;
eine erste Statusspeichereinheit (123), um von der Dentalbearbeitungsmaschine (1) Ausführungsstatus der Vielzahl in der Auftragsliste (JL) enthaltenen Verarbeitungsprogramme (CP) zu beziehen und die Ausführungsstatus der Vielzahl von Verarbeitungsprogrammen (CP) zu speichern; und
eine erste Fehlererfassungseinheit (124) zum Erfassen eines Fehlers in der Dentalbearbeitungsmaschine (1); **dadurch gekennzeichnet, dass**
das Dentalbearbeitungsmaschinen-Betriebssystem (10) weiterhin die Dentalbearbeitungsmaschine (1) umfasst, die mit der Bedienvorrichtung (11) in gegenseitiger Datenkommunikation steht;
wobei die Bedienvorrichtung (11) weiterhin eine erste Überspringverarbeitungseinheit (125) umfasst, die dazu eingerichtet ist, wenn die erste Fehlererfassungseinheit (124) einen Fehler erfasst, während die Vielzahl der in der Auftragsliste (JL) enthaltenen Verarbeitungsprogramme (CP) sequentiell ausgeführt wird, den Ausführungsstatus eines der Verarbeitungsprogramme (CP), das gerade ausgeführt wird, wenn der Fehler erkannt wird, auf ein Ende zu setzen, basierend auf den Ausführungsstatus der Vielzahl von Verarbeitungsprogrammen (CP), die in der ersten Statusspeichereinheit (123) gespeichert sind, und die Dentalbearbeitungsmaschine (1) zu veranlassen, ein anderes Verarbeitungsprogramm (CP), das als nächstes nach dem einen der Verarbeitungsprogramme (CP) ausgeführt werden soll, gemäß der in der Auftragsliste (JL) angegebenen Reihenfolge auszuführen,
wobei die Dentalbearbeitungsmaschine (1) dazu eingerichtet ist, Verarbeitungsprogramme, die von der Bedienvorrichtung (11) gesendet werden, und eine Auftragsliste zu speichern, die eine Reihenfolge angibt, in der eine Vielzahl von Verarbeitungsprogrammen auszuführen ist,
die Verarbeitungsprogramme der Reihe nach gemäß der Auftragsliste auszuführen,
bei Auftreten eines Fehlers gestoppt zu werden, und
bei Wiederinbetriebnahme der Dentalbearbeitungsmaschine (1) einen Initialisierungsvorgang auszuführen, um die Bearbeitungsprogramme und die Auftragsliste aus der Dentalbearbeitungsmaschine (1) zu löschen, und
die erste Überspringverarbeitungseinheit (125) dazu eingerichtet ist, einen Vorgang, bei dem die Bedienvorrichtung (11) veranlasst wird, die Auftragsliste der Dentalbearbeitungsmaschine (1) auf der Grundlage der in der ersten Listenspeichereinheit (122) gespeicherten Auftragsliste (JL) wiederherzustellen, und einen Vorgang auszuführen, bei dem die Bedienvorrichtung (11) veranlasst wird, den Ausführungsstatus des einen der Behandlungsprogramme (CP), in dem ein Fehler erfasst wurde, in der Auftragsliste auf "Ende" zu setzen.

2. Dentalbearbeitungsmaschinen-Betriebssystem (10) nach Anspruch 1, bei dem die Dentalbearbeitungsmaschinen-Bedienvorrichtung (11) weiterhin eine erste Aktualisierungsverarbeitungseinheit (126) zum Beziehen eines neuesten Status der Dentalbearbeitungsmaschine (1) und zum Aktualisieren der Ausführungsstatus der Vielzahl von in der ersten Statusspeichereinheit (123) gespeicherten Bearbeitungsprogrammen (CP) umfasst.

3. Dentalbearbeitungsmaschinen-Betriebssystem (10) nach Anspruch 1 oder 2, bei dem, wenn die erste Fehlererfassungseinheit (124) einen Fehler erfasst, eine vorbestimmte Tätigkeit ausgeführt wird, um die Ausführung eines Vorgangs der ersten Überspringverarbeitungseinheit (125) zu ermöglichen.

4. Dentalbearbeitungsmaschinen-Betriebssystem (10) nach Anspruch 3, bei dem die Dentalbearbeitungsmaschinen-Bedienvorrichtung (11) weiterhin eine erste Anzeigeverarbeitungseinheit (127) zum Anzeigen einer Betriebstaste zum Ausführen des Vorgangs der ersten Überspringverarbeitungseinheit (125) auf einer vorbestimmten Anzeigevorrichtung umfasst.

5. Dentalbearbeitungsmaschinen-Betriebssystem (10) nach einem der Ansprüche 1 bis 4; weiterhin umfassend:
einen Server (12), der datenkommunikativ mit der Bedienvorrichtung (11) verbunden ist, wobei der Server (12) umfasst:
eine zweite Listenspeichereinheit (141) zum Speichern der von der Bedienvorrichtung (11) bezogenen Auftragsliste (JL); und
eine zweite Statusverwaltungseinheit (142) zum Beziehen von Ausführungsstatus einer Vielzahl von Verarbeitungsprogrammen (CP), die in der Auftragsliste (JL) enthalten sind, durch die Bedienvorrichtung (11), und zum Speichern der Ausführungsstatus der Vielzahl von Verarbeitungsprogrammen (CP).

6. Dentalbearbeitungsmaschinen-Betriebssystem (10) nach Anspruch 5, bei dem der Server (12) weiterhin eine zweite Fehlererfassungseinheit (143) zum Erfassen eines Fehlers in der Dentalbearbeitungsmaschine (1) durch die Bedienvorrichtung (11) umfasst.

7. Dentalbearbeitungsmaschinen-Betriebssystem (10) nach Anspruch 5 oder 6, weiterhin umfassend eine zweite Aktualisierungsverarbeitungseinheit (144) zum Beziehen eines neuesten Status der Dentalbearbeitungsmaschine (1) durch die Bedienvorrichtung (11) und zum Aktualisieren der Ausführungsstatus der Vielzahl von Bearbeitungsprogrammen (CP), die in der zweiten Statusverwaltungseinheit (142) gespeichert sind.

8. Dentalbearbeitungsmaschinen-Betriebssystem (10) nach einem der Ansprüche 5 bis 7, weiterhin umfassend:
eine externe Vorrichtung (13), die datenkommunikativ mit dem Server (12) oder der Bedienvorrichtung (11) verbunden ist, wobei
die externe Vorrichtung (13) eine dritte Statusverwaltungseinheit (161) zum Beziehen von Ausführungsstatus einer Vielzahl von in der Auftragsliste (JL) enthaltenen Verarbeitungsprogrammen (CP) durch den Server (12) oder die Bedienvorrichtung (11) und zum Speichern der Ausführungsstatus der Vielzahl von Verarbeitungsprogrammen (CP) umfasst.

9. Dentalbearbeitungsmaschinen-Betriebssystem (10) nach Anspruch 8, bei dem die externe Vorrichtung (13) weiterhin eine dritte Fehlererfassungseinheit (162) zum Erfassen eines Fehlers in der Dentalbearbeitungsmaschine (1) durch den Server (12) oder die Bedienvorrichtung (11) umfasst.

10. Dentalbearbeitungsmaschinen-Betriebssystem (10) nach Anspruch 8 oder 9, bei dem die externe Vorrichtung (13) eine zweite Überspringverarbeitungseinheit (163) umfasst, die dazu eingerichtet ist, wenn die dritte Fehlererfassungseinheit (162) einen Fehler erfasst, während die Vielzahl der in der Auftragsliste (JL) enthaltenen Bearbeitungsprogramme (CP) sequentiell ausgeführt werden, den Ausführungsstatus eines der Bearbeitungsprogramme (CP), das gerade ausgeführt wird, wenn der Fehler erkannt wird, auf ein Ende zu setzen, basierend auf den Ausführungsstatus der Vielzahl von Verarbeitungsprogrammen (CP), die in der dritten Statusverwaltungseinheit (161) gespeichert sind, und die Dentalbearbeitungsmaschine (1) zu veranlassen, ein anderes Verarbeitungsprogramm (CP), das als nächstes nach dem einen der Verarbeitungsprogramme (CP) auszuführen ist, gemäß der in der Auftragsliste (JL) angegebenen Reihenfolge auszuführen.

11. Dentalbearbeitungsmaschinen-Betriebssystem (10) nach Anspruch 10, bei dem, wenn die dritte Fehlererfassungseinheit (162) einen Fehler erfasst, eine vorbestimmte Tätigkeit ausgeführt wird, um die Ausführung eines Vorgangs der zweiten Überspringverarbeitungseinheit (163) zu ermöglichen.

12. Dentalbearbeitungsmaschinen-Betriebssystem (10) nach Anspruch 11, weiterhin umfassend eine zweite Anzeigeverarbeitungseinheit (164) zum Anzeigen einer Betriebstaste zum Ausführen des Vorgangs der zweiten Überspringverarbeitungseinheit (163) auf einer vorbestimmten Anzeigevorrichtung, wenn die dritte Fehlererfassungseinheit einen Fehler erfasst.

13. Dentalbearbeitungsmaschinen-Betriebssystem (10) nach einem der Ansprüche 8 bis 12, weiterhin umfassend eine dritte Aktualisierungsverarbeitungseinheit (165) zum Erfassen eines aktuellen Status der Dentalbearbeitungsmaschine (1) durch den Server (12) oder die Bedienvorrichtung (11).

14. Dentalbearbeitungsmaschinen-Betriebsverfahren zum Betreiben einer Dentalbearbeitungsmaschine (1), wobei die Zahnbearbeitung das Fräsen von Zahnersatz ist, wobei das Betriebsverfahren die folgenden Schritte umfasst:
Speichern einer Auftragsliste (JL) in einer Bedienvorrichtung (11), in der eine Vielzahl von Bearbeitungsprogrammen (CP), die jeweils einen von der Dentalbearbeitungsmaschine (1) ausgeführten Bearbeitungsvorgang definieren, einer Reihenfolge zugeordnet werden, in der die Vielzahl von Bearbeitungsprogrammen (CP) auszuführen ist;
Beziehen von Ausführungsstatus der in der Auftragsliste (JL) enthaltenen Vielzahl von Bearbeitungsprogrammen (CP) durch die Betriebsvorrichtung (11) von der Dentalbearbeitungsmaschine (1) und Speichern der Ausführungsstatus der Vielzahl von Bearbeitungsprogrammen (CP); und
Erfassen eines Fehlers in der Dentalbearbeitungsmaschine (1) durch die Bedienvorrichtung (11); **gekennzeichnet durch**
den von der Bedienvorrichtung (11) ausgeführten Schritt, wenn ein Fehler festgestellt wird, während die Vielzahl in der Auftragsliste (JL) enthaltenen Verarbeitungsprogramme (CP) nacheinander ausgeführt wird, den Ausführungsstatus eines der Verarbeitungsprogramme (CP), das gerade ausgeführt wird, wenn der Fehler festgestellt wird, auf ein Ende zu setzen, basierend auf den Ausführungsstatus der Vielzahl von gespeicherten Verarbeitungsprogrammen (CP), und die Dentalbearbeitungsmaschine (1) zu veranlassen, ein anderes Verarbeitungsprogramm (CP), das als nächstes nach dem einen der Verarbeitungsprogramme (CP) ausgeführt werden soll, gemäß der in der Auftragsliste (JL) angegebenen Reihenfolge auszuführen,
die von der Dentalbearbeitungsmaschine ausgeführten Schritte, des
Speicherns von Verarbeitungsprogrammen, die von der Bedienvorrichtung (11) gesendet werden, und einer Auftragsliste, die eine Reihenfolge angibt, in der eine Vielzahl von Verarbeitungsprogrammen auszuführen ist,
Ausführens der Verarbeitungsprogramme in der Reihenfolge gemäß der Auftragsliste,
Stoppens bei Auftreten eines Fehlers, und
bei Wiederinbetriebnahme der Dentalbearbeitungsmaschine (1) des Ausführens eines Initialisierungsvorgangs, um die Bearbeitungsprogramme und die Auftragsliste aus der Dentalbearbeitungsmaschine (1) zu löschen,
und durch die von der Bedienvorrichtung (11) ausgeführten Schritte, des
Ausführens eines Vorgangs, bei dem die Bedienvorrichtung (11) veranlasst wird, die Auftragsliste der Dentalbearbeitungsmaschine (1) basierend auf der in der Bedienvorrichtung (11) gespeicherten Auftragsliste (JL) wiederherzustellen, und
des Setzens des Ausführungsstatus eines der Verarbeitungsprogramme (CP), bei dem ein Fehler festgestellt wurde, in der Auftragsliste auf "Ende".

## Revendications

1. Système de fonctionnement de machine de traitement dentaire (10), dans lequel ledit traitement dentaire est un fraisage de prothèse dentaire, comprenant:
un dispositif d'actionnement (11) de machine de traitement dentaire pour actionner une machine de traitement dentaire (1), le dispositif d'actionnement (11) comprenant :
une première unité de stockage de liste (122) pour stocker une liste de tâches (JL) dans laquelle une pluralité de programmes de traitement (CP), définissant chacun une procédure de traitement effectuée par la machine de traitement dentaire (1), sont associés à un ordre dans lequel la pluralité de programmes de traitement (CP) doivent être exécutés;
une première unité de stockage d'état (123) destinée à acquérir, à partir de la machine de traitement dentaire (1), des états d'exécution de la pluralité de programmes de traitement (CP) contenus dans la liste de tâches (JL), et à stocker les états d'exécution de la pluralité de programmes de traitement (CP); et
une première unité de détection d'erreur (124) destinée à détecter une erreur dans la machine de traitement dentaire (1) ; **caractérisée en ce que** le système de fonctionnement de la machine de traitement dentaire (10) comprenant en outre
la machine de traitement dentaire (1), reliée au dispositif de fonctionnement (11) par une communication de données mutuelle;
le dispositif de fonctionnement (11) comprenant en outre une première unité de traitement de saut (125) configurée pour, si la première unité de détection d'erreur (124) détecte une erreur pendant que la pluralité de programmes de traitement (CP) contenus dans la liste de tâches (JL) sont en train d'être exécutés séquentiellement, fixer l'état d'exécution de l'un des programmes de traitement (CP) qui est en train d'être exécuté lorsque l'erreur est détectée à une fin, sur la base des états d'exécution de la pluralité de programmes de traitement (CP) stockés dans la première unité de stockage d'état (123), et faire en sorte que la machine de traitement dentaire (1) exécute un autre programme de traitement (CP) qui doit être exécuté après l'un des programmes de traitement (CP), selon l'ordre spécifié dans la liste de tâches (JL),
la machine de traitement dentaire (1) étant configurée pour stocker des programmes de traitement envoyés par le dispositif de fonctionnement (11) et une liste de tâches spécifiant un ordre dans lequel une pluralité de programmes de traitement doit être exécutée,
exécuter les programmes de traitement en séquence selon la liste des tâches, être arrêté lorsqu'une erreur se produit, et
exécuter un processus d'initialisation lorsque la machine de traitement dentaire (1) est reprise, pour effacer les programmes de traitement et la liste des tâches de la machine de traitement dentaire (1), et
la première unité de traitement de saut (125) est configurée pour exécuter un processus consistant à amener le dispositif de fonctionnement (11) à restaurer la liste de tâches de la machine de traitement dentaire (1) sur la base de la liste de tâches (JL) stockée dans la première unité de stockage de liste (122), et un processus consistant à amener le dispositif de fonctionnement (11) à régler l'état d'exécution de l'un des programmes de traitement (CP), dans lequel une erreur a été détectée, sur "Fin" dans la liste de tâches.

2. Système de fonctionnement de machine de traitement dentaire (10) selon la revendication 1, dans lequel le dispositif de fonctionnement de machine de traitement dentaire (11) comprend en outre une première unité de traitement de mise à jour (126) pour acquérir un dernier état de la machine de traitement dentaire (1) et mettre à jour les états d'exécution de la pluralité de programmes de traitement (CP) stockés dans la première unité de stockage d'état (123).

3. Système de fonctionnement de machine de traitement dentaire (10) selon les revendications 1 ou 2, dans lequel, si la première unité de détection d'erreur (124) détecte une erreur, une opération prédéterminée est effectuée pour permettre l'exécution d'un processus de la première unité de processus de saut (125).

4. Système de fonctionnement de machine de traitement dentaire (10) selon la revendication 3, dans lequel le dispositif de fonctionnement de machine de traitement dentaire (11) comprend en outre une première unité de traitement d'affichage (127) pour afficher un bouton d'opération pour exécuter le processus de la première unité de processus de saut (125) sur un dispositif d'affichage prédéterminé.

5. Système de fonctionnement d'une machine de traitement dentaire (10) selon l'une quelconque des revendications 1 à 4, comprenant en outre:
un serveur (12), connecté par communication de données au dispositif de fonctionnement (11), le serveur (12) comprenant:
une deuxième unité de stockage de liste (141) pour stocker la liste de tâches (JL) acquise à partir du dispositif de fonctionnement (11); et
une deuxième unité de gestion d'état (142) pour acquérir des états d'exécution d'une pluralité de programmes de traitement (CP) contenus dans la liste de tâches (JL) par l'intermédiaire du dispositif de fonctionnement (11), et stocker les états d'exécution de la pluralité de programmes de traitement (CP).

6. Système de fonctionnement de machine de traitement dentaire (10) selon la revendication 5, dans lequel le serveur (12) comprend en outre une deuxième unité de détection d'erreur (143)) pour détecter une erreur dans la machine de traitement dentaire (1) par le biais du dispositif de fonctionnement (11).

7. Système de fonctionnement de machine de traitement dentaire (10) selon les revendications 5 ou 6, comprenant en outre une deuxième unité de traitement de mise à jour (144) pour acquérir un dernier état de la machine de traitement dentaire (1) par l'intermédiaire du dispositif de fonctionnement (11), et mettre à jour les états d'exécution de la pluralité de programmes de traitement (CP) stockés dans la deuxième unité de gestion d'état (142).

8. Système de fonctionnement de machine de traitement dentaire (10) selon l'une quelconque des revendications 5 à 7, comprenant en outre:
un dispositif externe (13), connecté par communication de données au serveur (12) ou au dispositif de fonctionnement (11), et dans lequel
des états d'exécution d'une pluralité de programmes de traitement (CP) contenus dans la liste de tâches (JL) par l'intermédiaire du serveur (12) ou du dispositif de fonctionnement (11), et stocker les états d'exécution de la pluralité de programmes de traitement (CP).

9. Système de fonctionnement de machine de traitement dentaire (10) selon la revendication 8, dans lequel le dispositif externe (13) comprend en outre une troisième unité de détection d'erreur (162) pour détecter une erreur dans la machine de traitement dentaire (1) par l'intermédiaire du serveur (12) ou du dispositif de fonctionnement (11).

10. Système de fonctionnement de machine de traitement dentaire (10) selon les revendications 8 ou 9, dans lequel le dispositif externe (13) comprend une deuxième unité de traitement de saut (163) configurée pour, si la troisième unité de détection d'erreur (162) détecte une erreur alors que la pluralité de programmes de traitement (CP) contenus dans la liste de tâches (JL) sont en cours d'exécution séquentielle, régler l'état d'exécution de l'un des programmes de traitement (CP) qui est en cours d'exécution lorsque l'erreur est détectée sur une fin, sur la base des états d'exécution de la pluralité de programmes de traitement (CP) stockés dans la troisième unité de gestion d'état (161), et faire en sorte que la machine de traitement dentaire (1) exécute un autre programme de traitement (CP) qui doit être exécuté après l'un des programmes de traitement (CP), selon l'ordre spécifié dans la liste de tâches (JL).

11. Système de fonctionnement de machine de traitement dentaire (10) selon la revendication 10, dans lequel, si la troisième unité de détection d'erreur (162) détecte une erreur, une opération prédéterminée est effectuée pour permettre l'exécution d'un processus de la deuxième unité de processus de saut (163).

12. Système de fonctionnement de machine de traitement dentaire (10) selon la revendication 11, comprenant en outre une deuxième unité de traitement d'affichage (164) pour afficher un bouton d'opération pour exécuter le processus de la deuxième unité de traitement de saut (163) sur un dispositif d'affichage prédéterminé si la troisième unité de détection d'erreur détecte une erreur.

13. Système de fonctionnement de machine de traitement dentaire (10) selon l'une quelconque des revendications 8 à 12, comprenant en outre une troisième unité de traitement de mise à jour (165) pour acquérir un dernier état de la machine de traitement dentaire (1) par l'intermédiaire du serveur (12) ou du dispositif de fonctionnement (11).

14. Procédé de fonctionnement d'une machine de traitement dentaire pour faire fonctionner une machine de traitement dentaire (1), dans lequel ledit traitement dentaire est un fraisage de prothèse dentaire,
le mode opératoire comprenant les étapes suivantes:
stockage, dans un dispositif de fonctionnement (11), d'une liste de tâches (JL) dans laquelle une pluralité de programmes de traitement (CP), définissant chacun une procédure de traitement effectuée par la machine de traitement dentaire (1), sont associés à un ordre dans lequel la pluralité de programmes de traitement (CP) doivent être exécutés;
acquisition, à l'aide du dispositif de fonctionnement (11), à partir de la machine de traitement dentaire (1), des états d'exécution de la pluralité de programmes de traitement (CP) contenus dans la liste de tâches (JL), et stockage des états d'exécution de la pluralité de programmes de traitement (CP) ; et
détection, par le dispositif de fonctionnement (11), d'une erreur dans la machine de traitement dentaire (1);
**caractérisé par**
l'étape, exécutée par le dispositif de fonctionnement (11), si une erreur est détectée pendant que la pluralité de programmes de traitement (CP) contenus dans la liste de tâches (JL) sont en cours d'exécution séquentielle, consistant à mettre fin à l'état d'exécution de l'un des programmes de traitement (CP) qui est actuellement en cours d'exécution lorsque l'erreur est détectée, en se basant sur les états d'exécution de la pluralité de programmes de traitement (CP) stockés, et en faisant en sorte que la machine de traitement dentaire (1) exécute un autre programme de traitement (CP) qui doit être exécuté après l'un des programmes de traitement (CP), selon l'ordre spécifié dans la liste de tâches (JL), les étapes, réalisées par la machine de traitement dentaire, consistant à
stocker des programmes de traitement envoyés par le dispositif de fonctionnement (11) et une liste de tâches spécifiant un ordre dans lequel une pluralité de programmes de traitement doit être exécutée, exécuter les programmes de traitement en séquence selon la liste de tâches, être arrêté lorsqu'une erreur se produit, et
exécuter un processus d'initialisation lorsque la machine de traitement dentaire (1) est reprise, pour effacer les programmes de traitement et la liste des tâches de la machine de traitement dentaire (1),
et par les étapes, exécutées par le dispositif de fonctionnement (11), consistant à exécuter un processus consistant à amener le dispositif de fonctionnement (11) à restaurer la liste de tâches de la machine de traitement dentaire (1) sur la base de la liste de tâches (JL) stockée dans le dispositif de fonctionnement (11), et
placer l'état d'exécution de l'un des programmes de traitement (CP), dans lequel une erreur a été détectée, sur "Fin" dans la liste des tâches.
